(19) Europäisches Patentamt
European Patent Office
Office européen des brevets

(11) EP 4 644 485 A1

(12) EUROPEAN PATENT APPLICATION
published in accordance with Art. 153(4) EPC

(43) Date of publication:
**05.11.2025 Bulletin 2025/45**

(21) Application number: **22970142.0**

(22) Date of filing: **28.12.2022**

(51) International Patent Classification (IPC):
***C08L 83/07*** (2006.01) ***C08K 3/22*** (2006.01)
***C08K 7/22*** (2006.01) ***C08L 23/06*** (2006.01)
***C08L 83/05*** (2006.01)

(52) Cooperative Patent Classification (CPC):
**C08K 3/22; C08K 7/22; C08L 23/06; C08L 83/04**

(86) International application number:
**PCT/JP2022/048512**

(87) International publication number:
**WO 2024/142354 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Fukoku Co., Ltd.**
**Ageo-shi, Saitama 362-8561 (JP)**

(72) Inventors:
- **ASAMI Takahiro**
  **Ageo-shi, Saitama 362-8561 (JP)**
- **TODA Nono**
  **Ageo-shi, Saitama 362-8561 (JP)**

(74) Representative: **Bianchetti & Minoja with Trevisan & Cuonzo IPS SRL**
**Via Plinio, 63**
**20129 Milano (IT)**

# (54) THERMALLY CONDUCTIVE SILICONE COMPOSITION AND CURED PRODUCT THEREOF

(57) A thermally conductive silicone composition that is liquid and curable, contains (A) a liquid silicone, (B) a hydrosilylation catalyst, and (C) a filler, where the filler includes at least (C-1) a thermally conductive filler having a true density greater than the density of the liquid silicone, and (C-2) a low-density filler having a true density equal to or less than the density of the liquid silicone, and the particle size distribution of the filler is controlled so that the filler is dispersed in a state close to the closest packing in a matrix including the liquid silicone.

[FIG. 1]

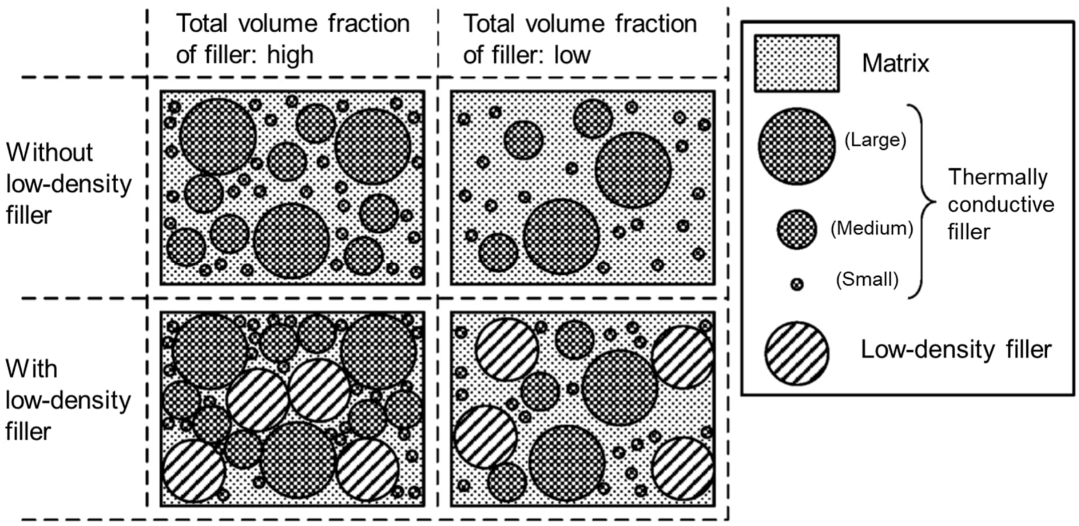




Processed by Luminess, 75001 PARIS (FR)

## Description

### Technical Field

The present invention relates to a thermally conductive silicone composition and a cured product thereof.

### Background Art

In recent years, electric and electronic components have become smaller and more integrated, and the amount of heat generated has increased accordingly. Similarly, the capacity and output of secondary batteries have increased, and the amount of heat generated has also increased. It is necessary to prevent the temperature of heat-generating elements, such as electric and electronic components and secondary batteries, from rising excessively, and therefore a structure is adopted in which the heat generated by the heat-generating elements is conducted away to a heat-dissipating element, such as a heat sink or exterior case. Thermally conductive compositions or their cured products are used to enhance the thermal bonding between the heat-generating element and the heat-dissipating element by interposing them between the heat-generating element and the heat-dissipating element, efficiently transferring heat from the heat-generating element to the heat-dissipating element. As the thermally conductive compositions, thermally conductive silicone compositions containing silicone as a matrix and various fillers added to the silicone matrix are widely used. The thermally conductive silicone compositions or their cured products are commercially available in various forms, such as heat-dissipating grease and heat-dissipating sheets. Among these, thermally conductive silicone compositions and their cured products which are called gap fillers are widely used because they are liquid when applied to heat-generating or heat-dissipating elements and exhibit excellent conformability to irregularities (i.e., gap filling properties), allowing for precise application, and as they harden over time, they prevent the occurrence of pumping out and dripping.

In order to improve heat dissipation performance by interposing a thermally conductive silicone composition or its cured product between a heat-generating element and a heat-dissipating element, it is first important that the thermally conductive silicone composition or its cured product has high thermal conductivity, and in order to increase the thermally conductivity, a thermally conductive filler having high thermal conductivity is mixed into the thermally conductive silicone composition. In addition, it is also important to reduce the thermal resistance at the interface between the heat-generating element and the thermally conductive silicone composition or its cured product, and at the interface between the heat-dissipating element and the thermally conductive silicone composition or its cured product, in order to improve the heat-dissipation properties. However, when the mixing ratio of the thermally conductive filler is increased in order to obtain high thermal conductivity, the viscosity of the thermally conductive silicone composition increases, and as a result, the adhesion when the thermally conductive silicone composition or its cured product contacts the heat-generating element or the heat-dissipating element decreases, leading to higher heat resistance at the interface. In order to reduce the viscosity, a method of diluting the uncured thermally conductive silicone composition with an organic solvent may be used. However, if the thermally conductive silicone composition or its cured product contains volatile components due to the use of an organic solvent, air bubbles may form in the thermally conductive silicone composition or its cured product over time, or voids may form at the interface with the heat-dissipating element or heat-generating element, making it difficult to transfer heat. For the same reason, it is also undesirable for the thermally conductive silicone composition or its cured product to generate volatile components as a result of a chemical reaction.

In addition, increasing the mixing ratio of the thermally conductive filler in the thermally conductive silicone composition results in an increase in the hardness of its cured product. As a result, the shock absorption capacity is reduced, and the ability to relax stress caused by expansion and contraction due to temperature changes in electric components, electronic components, secondary batteries, etc., is also diminished. Meanwhile, fillers made of inorganic materials with high thermal conductivity, that is, inorganic fillers, are generally used as thermally conductive fillers. However, the density of inorganic fillers is much higher than that of silicone. Therefore, when the mixing ratio of the thermally conductive filler in the thermally conductive silicone composition is increased, the density of the thermally conductive silicone composition and its cured product also increases, resulting in a higher mass for electronic devices and automobiles. When the mass increases, for example, the portability of electronic devices decreases, and the driving range of automobiles is reduced. Therefore, it is desirable to reduce the weight of thermally conductive silicone compositions containing thermally conductive fillers.

Patent Literature 1, which is related to a thermally conductive composition containing a thermally conductive filler, discloses that in an insulating heat-dissipating film using crosslinked rubber, particles made of an organic substance, i.e., an organic filler, are added to the rubber in addition to the inorganic filler, in order to achieve high thermal conductivity while reducing the amount of the inorganic filler blended into the rubber. In the technology described in Patent Literature 1, plate-shaped particles of boron nitride are used as the inorganic filler, while polyamide particles or crosslinked polyacrylic ester particles which have an average particle size larger than that of the inorganic filler are used as the organic filler, thereby localizing the inorganic filler in the gaps between the particles of the organic filler in the crosslinked rubber. Since the

inorganic filler is localized in the gaps between the particles of the organic filler, heat transfer paths by the inorganic filler are easily formed, and even if the amount of inorganic filler blended is small, thermal conductivity can be improved, and an insulating heat-dissipating film with excellent mechanical properties can be obtained.

Citation List

Patent Literature

Patent Literature 1: JP 2012-224711 A

Non-Patent Literature

Non-Patent Literature 1: Jong-Woo, et al., "The properties of AlN-filled epoxy molding compounds by the effects of filler size distribution", J. Mater. Sci., 35, 5907-5913 (2000)

Summary of Invention

Technical Problem

In the technology described in Patent Literature 1, plate-shaped particles of boron nitride are used as the inorganic filler with high thermal conductivity; however, the plate-shaped filler increases the viscosity of the uncured thermally conductive composition, leading to an increase in the hardness of the cured product and a loss of flexibility. Furthermore, in order to properly arrange the inorganic filler in the gaps between the particles of the organic filler, it is necessary that the volume fraction of the total fillers, combining the inorganic filler and the organic filler in the thermally conductive composition, i.e., the total volume fraction, be equal to or greater than a certain value. For these reasons, in the technology described in Patent Literature 1, the viscosity of the uncured thermally conductive composition tends to be high. If the viscosity of the thermally conductive composition is high, the hardness of the cured product may also increase.

Accordingly, it is an object of the present invention to provide a thermally conductive silicone composition and a cured product thereof, which are lightweight and have high thermal conductivity, while the uncured composition has low viscosity, and the cured product exhibits low hardness and excellent flexibility.

Solution to Problem

The present inventors have discovered that when a thermally conductive silicone composition is obtained by blending a first filler having high thermal conductivity and a second filler having low density with silicone, the flexibility of the thermally conductive silicone composition and its cured product can be improved by controlling the particle size distribution of the fillers, and have completed the present invention. That is, according to one aspect of the present invention, a thermally conductive silicone composition is provided, being liquid and curable, and comprising:

(A) a liquid silicone,

(B) a hydrosilylation catalyst, and

(C) a filler,

wherein the filler comprises at least

(C-1) a thermally conductive filler having a true density greater than the density of the liquid silicone, and

(C-2) a low-density filler having a true density equal to or less than the density of the liquid silicone, and

wherein, when a number of particle sizes as calculation points for the cumulative frequency in the cumulative particle size distribution of the filler on a volume basis is denoted as R,

the particle sizes of the thermally conductive filler, as the minimum and maximum among the particle sizes as calculation points for the cumulative frequency, are denoted as P (μm) and Q (μm), respectively,

the particle size of the filler at the nth calculation point, determined to satisfy the following formulas (a1) and (a2), is

denoted as $x_n$ (μm) (where n is an integer satisfying $1 \leq n \leq R$) and

the volume-base cumulative frequency of the particle size of the thermally conductive filler corresponding to the particle size $x_n$ in the cumulative particle size distribution is denoted as $c_n$ (%),

with respect to the particle size distribution of the filler, the minimum value $E_{min}$ of the mean squared error E, expressed by the following formula (a3), and the value $a_0$ of the coefficient a in the following formula (a4), corresponding to the minimum value $E_{min}$, satisfy the following formulas:

$$0 \leq E_{min} \leq 40$$

and

$$6.0 \leq a_0 \leq 13.0.$$

[Math. 1]

$$x_n = k^{n-1}P \qquad (a1)$$

$$x_R = Q \qquad (a2)$$

$$E = \frac{1}{R}\sum_{n=1}^{R}(c_n - y_n)^2 \qquad (a3)$$

where

$$y_n = \begin{cases} a x_n^{1/2} & (a x_n^{1/2} < 100) \\ 100 & (a x_n^{1/2} \geqq 100) \end{cases} \qquad (a4)$$

According to another aspect of the present invention, a cured product is provided, obtained by curing the above-mentioned thermally conductive silicone composition via a hydrosilylation reaction.

Advantageous Effects of Invention

According to the present invention, it is possible to obtain a thermally conductive silicone composition and a cured product thereof, which are lightweight and have high thermal conductivity, while the uncured composition has low viscosity, and the cured product exhibits low hardness and excellent flexibility.

Brief Description of Drawings

FIG. 1 is a schematic diagram illustrating the difference in the distribution of a thermally conductive filler, depending on whether or not a low-density filler is added and whether the total volume fraction of the fillers is high or low.

FIG. 2 is a graph showing the relationship between particle size and cumulative frequency, related to the thermally conductive filler.

FIG. 3 is a graph showing the relationship between particle size and cumulative frequency, related to the thermally conductive filler.

FIG. 4 is a graph showing the relationship between particle size and cumulative frequency, related to the thermally

conductive filler.

Description of Embodiments

Embodiments for carrying out the present invention will be described. A thermally conductive silicone composition according to the present invention is in liquid from and is used to enhance thermal bonding between a heat-generating element and a heat-dissipating element by being applied between the heat-generating element and the heat-dissipating element in either its original state (uncured) or in its cured state (i.e., as a cured product). Thermally conductive silicone compositions are generally mixtures of liquid silicone made of silicone polymer, a hydrosilylation catalyst for causing a crosslinking reaction in the silicone polymer, and a thermally conductive filler for improving thermal conductivity. Since the thermally conductive filler is usually made of an inorganic material with a high density, the mass of the thermally conductive silicone composition and its cured product increases as the amount of the thermally conductive filler is increased. Therefore, in the thermally conductive silicone composition according to the present invention, in addition to the thermally conductive filler, a low-density filler with a true density equal to or smaller than the density of the liquid silicone is blended into the liquid silicone. In this specification, the volumes of the fillers refer to the true volumes of the fillers as particles, and the true density and volume fraction are determined based on these true volumes. As described later, a hollow body may be used as the low-density filler, and when the low-density filler is a hollow body, the volume including the hollow part is the true volume of the low-density filler, and the mass of the low-density filler divided by the true volume is the true density of the low-density filler. Even if the volume fraction of the thermally conductive filler in the thermally conductive silicone composition is the same, the presence of the low-density filler increases the ratio of the volume of the thermally conductive filler to the volume of the liquid silicone that is the matrix. Therefore, the thermally conductive fillers are close to each other in the matrix, enhancing the thermal conductivity of the thermally conductive silicone composition and its cured product. By adding the low-density filler in this way, high thermal conductivity can be attained with a small amount of thermally conductive filler, thereby achieving a reduction in the weight of the thermally conductive silicone composition and its cured product.

Incidentally, when dispersing particles in a matrix, the particle size and the addition ratio of each particle size are controlled so that the spaces between larger particles are filled with smaller particles, and the spaces between the smaller particles are further filled with even finer particles, resulting in a state close to closest packing. It is known that this allows the particles to be packed densely while reducing the viscosity and hardness of the matrix. In the thermally conductive silicone composition according to the present invention, the particle size distribution of the entire filler, which combines the thermally conductive filler and the low-density filler, is optimized to achieve sufficient thermal conductivity, while the viscosity of the thermally conductive silicone composition is reduced and the hardness of the cured product is reduced, thereby ensuring sufficient flexibility. The optimization of the particle size distribution of the fillers in the present invention will be described later.

FIG. 1 is a schematic diagram illustrating the difference in the distribution of a thermally conductive filler in a thermally conductive silicone composition, depending on whether or not a low-density filler is added to the matrix made of silicone and whether the total volume fraction of the fillers is high or low. As shown in the figure, when the total volume fraction of the fillers is small, even with the addition of the low-density filler, the distance between the thermally conductive filler particles does not change significantly, resulting in only a small improvement in thermal conductivity. In contrast, once the total volume fraction of the fillers reaches a certain level or higher, adding the low-density filler dramatically shortens the distance between the thermally conductive filler particles, leading to a significant improvement in thermal conductivity.

The main components that make up the thermally conductive silicone composition are described below.

<Component (A): Liquid Silicone (Silicone Oil)>

The liquid silicone that is component (A) and forms the matrix of the liquid silicone composition may be any silicone, as long as it is composed of a silicone polymer that undergoes a crosslinking reaction in the presence of a hydrosilylation catalyst. However, in general silicone compositions, the liquid silicone is often a mixture of an organopolysiloxane having an alkenyl group and an organohydrogenpolysiloxane having silicon atom-bound hydrogen atoms in side chains of the molecular chain. The present inventors have also considered applying the liquid silicone used in such general silicone compositions to a thermally conductive silicone composition.

Liquid silicone used in general silicone compositions undergoes crosslinking in the presence of a catalyst via a hydrosilylation reaction, resulting in a cured product. In order to reduce the viscosity of the thermally conductive silicone composition, it is necessary to lower the viscosity of the liquid silicone serving as the matrix. One method for reducing the viscosity of liquid silicone is to use liquid silicone with a low molecular weight. However, when liquid silicone with a low molecular weight is crosslinked, the crosslink density increases, and the hardness of the cured product becomes higher. On the other hand, in order to reduce the hardness of the cured product while using low molecular weight liquid silicone, a large amount of organohydrogenpolysiloxane which has silicon atom-bound hydrogen atoms in the molecule needs to be

added to the liquid silicone to extend the molecular chain. However, in this case, the amount of silicon atom-bound hydrogen atoms relative to alkenyl groups increases. Furthermore, the silicon atom-bound hydrogen atoms present in side chains of the molecular chain of the organohydrogenpolysiloxane do not react completely due to steric hindrance and tend to remain even after curing. For these reasons, when the proportion of organohydrogenpolysiloxane in the liquid silicone is increased, a large amount of silicon atom-bound hydrogen atoms remains even after curing via crosslinking.

After curing, the silicon atom-bound hydrogen atoms that remain react with water in the presence of a catalyst to form silanol groups. A crosslinking reaction then proceeds between the silanol groups formed and the remaining silicon atom-bound hydrogen atoms. Thus, the cured thermally conductive silicone product, obtained by crosslinking an organopolysiloxane having an alkenyl group with an organohydrogenpolysiloxane having silicon atom-bound hydrogen atoms in side chains of the molecular chain, may initially exhibit low hardness but may gradually become harder with prolonged use. Therefore, in the liquid silicone used in the present invention, it is preferable to use an organohydrogenpolysiloxane having silicon atom-bound hydrogen atoms at the ends of the molecular chain as a crosslinking extender, and an organopolysiloxane having at least three or more alkenyl groups in the molecule as a crosslinking point. By using an organohydrogenpolysiloxane having silicon atom-bound hydrogen atoms at the ends of the molecular chain, rather than in side chains of the molecular chain, it is possible to prevent a decrease in reactivity due to steric hindrance and reduce the number of remaining silicon atom-bound hydrogen atoms. In this way, by reducing the crosslink density through the extension of the molecular chain, the cured product exhibits low hardness, and since fewer silicon atom-bound hydrogen atoms remain, it can maintain this low hardness over a long period.

As described above, the liquid silicone used in the thermally conductive silicone composition according to the present invention preferably includes the following four types of polymers:

(A-1) an organopolysiloxane including an alkenyl group at each of both ends of the molecular chain,

(A-2) an organopolysiloxane including an alkenyl group at one end of the molecular chain and no reactive functional group at the other end,

(A-3) an organopolysiloxane including at least three or more alkenyl groups in the molecule, and

(A-4) an organohydrogenpolysiloxane including a silicon atom-bound hydrogen atom at the ends of the molecular chain and no silicon atom-bound hydrogen atoms in the side chains of the molecular chain.

Among the polymers of components (A-1) to (A-4), the polymer of component (A-1), which is an organopolysiloxane including an alkenyl group at each of both ends of the molecular chain, functions as the base polymer of the liquid silicone.

The polymer of component (A-2), which is an organopolysiloxane including an alkenyl group at one end of the molecular chain and no reactive functional group at the other end, has the alkenyl group at one end of the molecular chain, which is subject to hydrosilylation reaction, while the other end has no reactive functional group, and as a result, the polymer is crosslinked only at one end, leaving the other end free to move. Thus, by incorporating the polymer of component (A-2) into the liquid silicone, it is possible to reduce the degree of crosslinking while suppressing bleed-out, thereby obtaining a flexible thermally conductive silicone composition. An example of the polymer of component (A-2) is an organopolysiloxane in which one end of the molecular chain is terminated with a vinyldimethylsilyl group, and the other end is terminated with either a trimethylsilyl group or a tert-butyldimethylsilyl group. The amount of component (A-2) added is preferably 10 to 90 parts by mass, based on 100 parts by mass of the liquid silicone. If the amount of component (A-2) added is less than 10 parts by mass, the effect of lowering the hardness of the cured product is insufficient, and if the amount added exceeds 90 parts by mass, the degree of crosslinking during the curing of the liquid silicone by hydrosilylation reaction is too low, making curing difficult. Examples of reactive functional groups referred to here include alkenyl groups, silicon atom-bound hydrogen atoms, silanol groups, amino groups, isocyanate groups, epoxy groups, acrylic groups, mercapto groups, alkoxy groups, and the like.

Furthermore, the polymer of component (A-3), which is an organopolysiloxane including at least three or more alkenyl groups on average per molecule, reacts with silicon atom-bound hydrogen atoms and functions as a crosslinking point. Components (A-1) and (A-2) are linear polymers, while component (A-3) can be either a linear or cyclic polymer and may have a branched structure. Examples of component (A-3) include cyclic polymers such as 2,4,6,8-tetramethyl-2,4,6,8-tetravinylcyclotetrasiloxane, and linear dimethylsilicone oils having four vinyl groups in the side chains or at the ends. Component (A-3) may exist in the liquid silicone without forming a complex, or it may exist as a platinum complex, such as a platinum(0)-2,4,6,8-tetramethyl-2,4,6,8-tetravinylcyclotetrasiloxane complex. Furthermore, both the non-complex type component (A-3) and the complex type component (A-3) may coexist in the liquid silicone. The amount of component (A-3) added is preferably 0.01 to 2 parts by mass, based on 100 parts by mass of the liquid silicone. If the amount of component (A-3) added is less than 0.01 part by mass, the number of crosslinking points is too few, preventing

curing from proceeding, and conversely, if the amount added exceeds 2 parts by mass, the number of crosslinking points is too many, resulting in higher hardness of the cured product.

In addition, the polymer of component (A-4), which is an organohydrogenpolysiloxane including a silicon atom-bound hydrogen atom at the ends of the molecular chain and no silicon atom-bound hydrogen atoms in the side chains of the molecular chain, reacts with each of the polymer components (A-1) to (A-3). This component (A-4) is a linear polymer that may or may not have a branched structure. Examples of component (A-4) include linear organohydrogenpolysiloxanes having silicon atom-bound hydrogen atoms at both ends of the molecular chain and no silicon atom-bound hydrogen atoms in the side chains of the molecular chain, and organohydrogenpolysiloxanes having silicon atom-bound hydrogen atoms at the ends of the molecular chain, no silicon atom-bound hydrogen atoms in the side chains of the molecular chain, and a branched structure. By using component (A-4), the polymer of component (A-1) can be extended via a hydrosilylation reaction, and even when a low-viscosity, alkenyl group-containing organopolysiloxane is used, the crosslink density of the cured product does not increase, and as a result, a cured product of the thermally conductive silicone composition with low hardness can be obtained. Furthermore, since the silicon atom-bound hydrogen atoms of component (A-4) are located at ends of the molecular chain rather than in side chains of the molecular chain, the reactivity is less likely to decrease due to steric hindrance, and unreacted silicon atom-bound hydrogen atoms are less likely to remain in the cured product. Incidentally, it is preferable to add component (A-4) such that the amount of silicon atom-bound hydrogen atoms in this component is 0.6 to 1.6 moles per mole of alkenyl groups in the liquid silicone. If the amount of silicon atom-bound hydrogen atoms per mole of alkenyl groups is less than 0.6 moles, curing does not occur, whereas if it exceeds 1.6 moles, the remaining silicon atom-bound hydrogen atoms increases, and in the presence of a catalyst, these silicon atom-bound hydrogen atoms react with water to form silanol groups. The silanol groups thus formed crosslink with the remaining silicon atom-bound hydrogen atoms, causing the hardness of the cured product to increase with long-term use.

In addition to the polymers of the above components (A-1) to (A-4), the liquid silicone that is component (A) may contain an organopolysiloxane represented by the following formula (1) as the polymer of component (A-5). Component (A-5) does not have reactive functional groups, such as alkenyl groups and silicon atom-bound hydrogen atoms, and therefore, it is possible to reduce the crosslink density during the curing of the liquid silicone, lowering the hardness of the cured product. The amount of component (A-5) added is preferably 0 to 80 parts by mass, based on 100 parts by mass of the liquid silicone. If the amount of component (A-5) added exceeds 80 parts by mass, the crosslink density becomes too low, and the shape cannot be retained.

[Chem. 1]

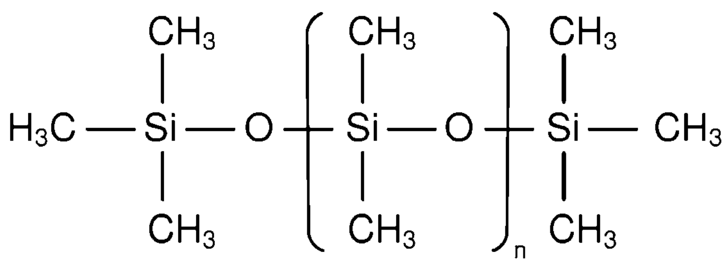

(1)

The viscosity of the liquid silicone containing components (A-1) to (A-4), or the liquid silicone containing components (A-1) to (A-5), is preferably 10 to 10,000 mPa·s. If the viscosity is below 10 mPa·s, the thermally conductive filler that is component (C-1) tends to settle during the storage of the thermally conductive silicone composition, and if the viscosity exceeds 10,000 mPa·s, the viscosity of the thermally conductive silicone composition increases, causing the thermally conductive silicone composition and the cured product to exhibit poor adhesion to heat-generating elements and heat-dissipating elements, which results in increased thermal resistance.

<Component (B): Hydrosilylation Catalyst>

The hydrosilylation catalyst that is component (B) is added to the thermally conductive silicone composition to promote the crosslinking reaction in the liquid silicone described above. Examples of the hydrosilylation catalyst include metal-containing catalysts such as platinum-based catalysts, rhodium-based catalysts, and palladium-based catalysts, and more specifically, these include platinum(0)-2,4,6,8-tetramethyl-2,4,6,8-tetravinylcyclotetrasiloxane complex and platinum(0)-1,3-divinyltetramethyldisiloxane complex. Any one of these catalysts may be used alone, or two or more catalysts may be used in combination. The content of the hydrosilylation catalyst in the thermally conductive silicone composition may be a so-called catalytic amount, and is preferably 0.1 to 1500 ppm relative to the liquid silicone in terms of the mass of the metal element contained in the catalyst. If the amount of the hydrosilylation catalyst added is less than 0.1

ppm, curing does not proceed, and if it exceeds 1500 ppm, the curing speed becomes too fast, complicating handling. The amount of the hydrosilylation catalyst added is appropriately adjusted so as to achieve the desired curing rate.

<Component (C): Filler>

The filler added as component (C) in the thermally conductive silicone composition according to the present invention includes at least two filler components: the thermally conductive filler that is component (C-1), and the low-density filler that is component (C-2). In addition to components (C-1) and (C-2), a filler component that is neither component (C-1) nor component (C-2) may also be added to the thermally conductive silicone composition.

The thermally conductive filler that is component (C-1) is used to impart thermal conductivity to the thermally conductive silicone composition and the cured product, and is, for example, in the form of filler particles made of a material with a thermal conductivity higher than that of liquid silicone. The thermally conductive filler has a true density greater than that of the liquid silicone. As the thermally conductive filler, for example, a simple metal, an alloy, a metal oxide, a metal hydroxide, a metal nitride, a metal carbide, a metal carbonate, silicon dioxide, boron nitride, silicon carbide, etc. can be used, and these may be used alone or in combination of two or more types. Simple metals used in the thermally conductive filler include gold, silver, copper, aluminum, magnesium, etc., and alloys include brass, various aluminum alloys, etc. In addition, metal oxides include aluminum oxide, zinc oxide, magnesium oxide, calcium oxide, etc.; metal hydroxides include aluminum hydroxide, magnesium hydroxide, etc.; metal nitrides include aluminum nitride, etc.; and metal carbonates include anhydrous magnesium carbonate, etc. Furthermore, as the thermally conductive filler added to the liquid silicone, either one type of thermally conductive filler may be used, or two or more types of thermally conductive fillers may be used in combination.

Furthermore, from the viewpoint of reducing the viscosity of the thermally conductive silicone composition and lowering the hardness of the cured product, the shape of the thermally conductive filler is preferably not plate-like, needle-like, or fibrous, and is preferably spherical, polyhedral, or amorphous. The aspect ratio of the shape of the thermally conductive filler is preferably close to 1. When a plate-like, needle-like, or fibrous filler is used, the contact probability and contact area between the filler particles increase, which in turn enhances the mechanical interaction between the fillers, resulting in higher viscosity of the thermally conductive silicone composition and greater hardness of the cured product. In addition, the thermally conductive filler is preferably made of a soft material, and the Mohs hardness of the material constituting the thermally conductive filler is preferably low. If the Mohs hardness is high, the thermally conductive filler is more likely to scrape the inner surfaces of dispensers used to apply the thermally conductive silicone composition, or kneading devices used to mix it, which increases the likelihood of issues such as contamination of the thermally conductive silicone composition by foreign matter and the need for more frequent maintenance of the devices. Furthermore, in order to obtain a lightweight and highly thermally conductive silicone composition and its cured product thereof, it is preferable for the thermally conductive filler itself to also be lightweight and highly thermally conductive.

Examples of the thermally conductive filler used in the thermally conductive silicone composition according to the present invention include aluminum hydroxide (Mohs hardness 3, density 2.42 g/cm$^3$, thermal conductivity 5 to 10 W/(m·K)) and anhydrous magnesium carbonate (Mohs hardness 3.5, density 3.04 g/cm$^3$, thermal conductivity approximately 15 W/(m·K)). The amount of thermally conductive filler added is preferably such that the volume fraction of the thermally conductive filler in the thermally conductive silicone composition and the cured product is in the range of 50.0 to 72.0 % by volume. If the amount added is less than 50.0% by volume, the densities of the thermally conductive silicone composition and its cured product decrease, but their thermal conductivities become lower. On the other hand, if the amount added exceeds 72.0% by volume, the thermal conductivities of the thermally conductive silicone composition and its cured product increase, but their densities become higher. Thermally conductive silicone compositions and their cured products are often used in electrical and electronic components, where electrical insulation is sometimes required to prevent electrical short circuits. It is also preferable to use a material with high electrical insulation properties for the thermally conductive filler that is component (C-1).

The low-density filler that is component (C-2) is added to the liquid silicone in order to reduce the weight of the thermally conductive silicone composition and its cured product, and to achieve high thermal conductivity by promoting the formation of thermal conduction paths through multiple thermally conductive fillers in the matrix that is the liquid silicone. The thermal conductivity of the low-density filler is generally lower than that of the thermally conductive filler. By adding the low-density filler, even if the volume fraction of the thermally conductive filler in the thermally conductive silicone composition or its cured product remains unchanged, the volume fraction of the thermally conductive filler relative to the liquid silicone increases, which shortens the distance between the thermally conductive fillers, enabling more efficient heat transfer. As a result, thermally conductive silicone compositions and their cured products which are lightweight yet exhibit high thermal conductivity can be obtained. From the viewpoint of weight reduction, the low-density filler that is component (C-2) has a true density equal to or less than the density of the liquid silicone. As an example, since the typical density of the liquid silicone is 0.97 g/cm$^3$, it is preferable for the true density of the low-density filler to be 0.97 g/cm$^3$ or less. Furthermore, the true density of the low-density filler is preferably 0.01 g/cm$^3$ or more. If the true density is less than 0.01

g/cm$^3$, the low-density filler tends to fly in the air during weighing or kneading, making handling difficult.

Since the purpose of adding the low-density filler is to bring the thermally conductive fillers closer together in the thermally conductive silicone composition and its cured product, the low-density filler may be solid, hollow, or porous, and there are no restrictions on the material of the low-density filler, as long as it has the desired true density. Specific examples of the low-density filler include solid polyethylene particles, solid polypropylene particles, resin hollow particles also called resin balloons, and glass hollow particles also called glass balloons. Low-density fillers made of solid polyethylene particles exhibit excellent load resistance, are less likely to deform due to shear during kneading, and have higher thermal conductivity than liquid silicone in which polyethylene is the matrix. The thermal conductivity of liquid silicone is about 0.2 W/(m·K), while the thermal conductivity of polyethylene is about 0.3 to 0.5 W/(m·K). When a low-density filler made of hollow resin particles or hollow glass particles is added, it is difficult to obtain the effect of improving the thermal conductivity of the thermally conductive silicone composition; however, since their true density is particularly low compared to that of the liquid silicone, they are excellent for weight reduction. The shape of the low-density filler is preferably spherical. In the case of spherical low-density fillers, the contact area between the filler particles is small, resulting in less mechanical interaction between the filler particles. As a result, the viscosity of the thermally conductive silicone composition is low, and the hardness of the cured product is also low. As the low-density filler added to the liquid silicone, one type or a combination of two or more types of low-density fillers may be used.

In the thermally conductive silicone composition according to the present invention, the thermally conductive filler that is component (C-1) and the low-density filler that is component (C-2) are added to the liquid silicone. At this time, the median diameter ratio-the ratio of the volumetric median diameter (D50) of the low-density filler to the volumetric median diameter (D50) of the thermally conductive filler, i.e., [D50 of the low-density filler / D50 of the thermally conductive filler]-is preferably 0.3 or more and 20 or less. If the median diameter ratio is less than 0.3, the low-density filler becomes trapped in the gaps between the thermally conductive filler particles, reducing the effect of the low-density filler in pushing aside the thermally conductive filler and bringing the thermally conductive filler particles closer together. On the other hand, if the median diameter ratio exceeds 20, the thickness of the thermally conductive silicone composition cannot be reduced, which increases thermal resistance and makes it difficult to dissipate heat from the heat-generating element.

The volume fraction of the total filler that is component (C) in the thermally conductive silicone composition and its cured product is preferably 70.0% by volume or more and 80.0% by volume or less. If the volume fraction of the filler in the thermally conductive silicone composition and its cured product is less than 70.0% by volume, even with the addition of the low-density filler, the volume fraction of the thermally conductive filler relative to the liquid silicone is not sufficiently high, hindering the thermally conductive filler particles from coming close enough to each other. On the other hand, if the volume fraction of the filler exceeds 80.0% by volume, the viscosity of the thermally conductive silicone composition increases, and its cured product becomes harder. Regarding the amounts of the thermally conductive filler and the low-density filler that are added to the liquid silicone, the volume ratio of the volume of the thermally conductive filler to the volume of the low-density filler, i.e., [volume of thermally conductive filler / volume of low-density filler] is preferably 1.67 to 22.0. If the volume ratio is below 1.67, the low-density filler forms a network structure in the matrix, which is likely to disrupt the heat transfer path of the thermally conductive filler, making transfer heat more difficult. On the other hand, if the volume ratio exceeds 22.0, the effect of the low-density filler pushing aside the thermally conductive filler and bringing the thermally conductive filler particles closer together is reduced, which diminishes the improvement in thermal conductivity.

In the thermally conductive silicone composition described here, the fillers are mixed into the liquid silicone at a high filling rate, such that the volume fraction of the fillers as a whole relative to the volume of the liquid silicone is, for example, 70% by volume or more. In order to obtain a thermally conductive silicone composition with low viscosity and its cured product with low hardness while mixing the fillers at a high filling rate, it is important to control the particle size and addition ratio of the fillers appropriately, ensuring a structure close to close packing, where small particles fill the gaps between larger particles, thus optimizing the particle size distribution of the fillers. Note that the particle size distribution of the fillers refers to the particle size distribution when all fillers added to the liquid silicone are considered as a single group. Although the particle size distribution is not optimized for each type of filler, from the viewpoint of establishing a heat transfer path, a relatively uniform particle size is used for the low-density filler, while a different particle size is used for the thermally conductive filler, and the overall particle size distribution of the fillers is optimized, thereby greatly improving thermal conductivity while maintaining the flexibility of the composition.

Incidentally, various studies have been conducted on the optimal mixing ratio of particles when particles of different particle sizes are mixed to achieve a structure close to close packing, and each of these studies assume that the particles have a single particle size, or they often discuss the optimization of particle size and addition ratio using only the average particle size. However, commercially available fillers, whether thermally conductive fillers or low-density fillers, do not have a single particle size, having a broad particle size distribution, and even if the average particle size is the same, the particle size distribution varies depending on the type of particle and the manufacturing method. For this reason, it may not be possible to lower the viscosity of the thermally conductive silicone composition or the hardness of the cured product by simply considering the addition ratio for each average particle size. In particular, when the amount of filler added increases, it becomes difficult to achieve both low viscosity and low hardness. Therefore, the present inventors have studied the

optimal particle size distribution by focusing on the cumulative particle size distribution on a volume basis after mixing different types of fillers with varying particle sizes. The contents and results of the study conducted by the present inventors are described below.

<Considerations>

Non-Patent Literature 1 discloses that for an aluminum nitride (AlN) filler mixed into an epoxy resin, a high filling rate close to close packing can be achieved by setting the ratio of large particles to small particles at 0.735:0.265 on a volume basis. Since the aluminum nitride filler mixed into an epoxy resin and the filler mixed into liquid silicone are under the same conditions in terms of achieving a state close to close packing, a case will be considered in which large particles and small particles are mixed in a volume ratio of 0.735:0.265.

In FIG. 2, the broken line A represents the cumulative frequency of particle sizes, i.e., the cumulative particle size distribution, when particles with a single particle size of 10 μm and particles with a single particle size of 1 μm are mixed in a volume ratio of 0.735:0.265. The broken line B represents the cumulative particle size distribution when particles with a single particle size of 50 μm, 5 μm, and 0.5 μm are mixed such that the volume ratio of 50 μm diameter particles to 5 μm diameter particles is 0.735:0.265, and the volume ratio of 5 μm diameter particles to 0.5 μm diameter particles is 0.735:0.265. Similarly, the broken line C represents the cumulative particle size distribution when particles with a single particle size of 80 μm, 4 μm, and 0.2 μm are mixed such that the volume ratio of 80 μm diameter particles to 4 μm diameter particles is 0.735:0.265, and the volume ratio of 4 μm diameter particles to 0.2 μm diameter particles is 0.735:0.265. However, even when the particle type is specified by the average particle size, the actual particles have a particle size distribution with some degree of variation. Even if multiple types of fillers with different average particle sizes are simply mixed in the above ratio, it is difficult to obtain a thermally conductive silicone composition having a cumulative particle size distribution as shown by the broken lines A to C in FIG. 2.

Therefore, the inventors have noticed that the cumulative particle size distributions shown by the broken lines A to C in FIG. 2 can be roughly approximated by formula (2), with a as a positive parameter, i.e., coefficient, when the cumulative frequency on a volume basis is y (%) and the particle size is x (μm). For example, the broken line A in FIG. 2 can be approximated by a curve with a = 19.3 in formula (2), and similarly, the broken line B can be approximated by a curve with a = 9.6, and the broken line C can be approximated by a curve with a = 7.6. The curves shown by the dashed lines in FIG. 2 are approximate curves shown by formula (2) when the coefficient a is set to various values. It is considered that formula (2) represents the optimal cumulative particle size distribution corresponding to the closest packing.

[Math. 2]

$$y\,[\%] = \begin{cases} ax^{1/2} & \left(ax^{1/2} < 100\right) \\ 100 & \left(ax^{1/2} \geqq 100\right) \end{cases} \qquad (2)$$

In formula (2), when $ax^{1/2} \geq 100$, y = 100% because the maximum value of the cumulative particle size distribution is 100% by definition. As shown in FIG. 2, if the coefficient a is increased, the approximation curve based on formula (2) shifts toward the smaller particle size side, and if the coefficient a is decreased, the approximation curve shifts toward the larger particle size side. By mixing multiple types of fillers with different average particle sizes to achieve a particle size distribution close to formula (2), a thermally conductive silicone composition with high thermal conductivity and low viscosity can be obtained, and by curing such a thermally conductive silicone composition, a cured product with high thermal conductivity and low hardness can be obtained. The cumulative particle size distribution on a volume basis, after mixing multiple types of fillers, can be calculated from the particle size distributions of the fillers and the blending ratio for each type of filler. Regarding the particle size distribution of the filler, it can be obtained by using the results from particle size distribution measurements conducted by the filler manufacturer.

When mixing multiple types of fillers, it is preferable to introduce an index that shows how much the actual cumulative particle size distribution of the fillers after mixing deviates from the cumulative particle size distribution shown in formula (2), and it is preferable to set the mixing ratio of the fillers so that the deviation indicated by this index is as small as possible. As an index of the degree of deviation in the cumulative particle size distribution, the mean squared error E is effective. When considering the cumulative particle size distribution, the particle size at the starting point (minimum value) of the cumulative frequency calculation is denoted as P (μm), the particle size at the endpoint (maximum value) is denoted as Q (μm) (where Q > P), let k be a constant that satisfies k > 1, and let 1 ≤ n ≤ R (where n is an integer), R particle sizes $\{x_n\}$ are considered as a sequence so as to satisfy the following formulas (3) and (4):

$$x_n = k^{n-1}P, \qquad (3)$$

$$x_R = Q \qquad (4)$$

Clearly, the particle sizes $\{x_n\}$ are determined such that R particle sizes follow a geometric progression with a common ratio k between particle size P that is the starting point and particle size Q that is the endpoint, including the starting point and the endpoint, and these sizes serve as calculation points for determining the cumulative frequency.

The cumulative frequency of the actual filler at particle size $x_n$ is defined as $c_n$ (%), the cumulative frequency obtained by substituting $x_n$ for x in equation (2) is defined as $y_n$, and the mean squared error, E, is determined by the following equation (5).

[Math. 3]

$$E = \frac{1}{R}\sum_{n=1}^{R}(c_n - y_n)^2 \qquad (5)$$

where

$$y_n = \begin{cases} a x_n^{1/2} & \left(a x_n^{1/2} < 100\right) \\ 100 & \left(a x_n^{1/2} \geqq 100\right) \end{cases} \qquad (6)$$

It can be said that the larger the mean squared error E, the greater the deviation between the particle size distribution of the actual filler and the particle size distribution shown in formula (2), and the smaller the value of E, the smaller the deviation. In reality, the mean squared error E is a quadratic function of the coefficient a, and therefore the minimum value of the mean squared error E can be obtained when varying the coefficient a, with the minimum value denoted as $E_{min}$, and the value of the coefficient a corresponding to the minimum value $E_{min}$ is determined as $a_0$.

<Results>

As a result of the above-mentioned studies, it was found that when multiple types of fillers are mixed in such a way that $E_{min}$ and $a_0$ simultaneously satisfy the following formulas (7) and (8), a thermally conductive silicone composition with low viscosity and low hardness in its cured product can be obtained.

$$0 \leq E_{min} \leq 40 \qquad (7)$$

$$6.0 \leq a_0 \leq 13.0 \qquad (8)$$

If the minimum value $E_{min}$ of the mean squared error E exceeds 40, the deviation from the ideal particle size distribution shown in formula (2) becomes large, causing the viscosity of the thermally conductive silicone composition to increase and accordingly the hardness of its cured product to rise. If $a_0$ is smaller than 6.0, the particle size distribution becomes excessively biased toward the larger particle size side, and as a result, when the thermally conductive silicone composition is placed between the heat-generating element and the heat-dissipating element, the gap between the heat-generating element and the heat-dissipating element widens, reducing heat transfer efficiency. On the other hand, if $a_0$ exceeds 13.0, the particle size distribution becomes excessively biased toward the smaller particle size side, increasing the surface area of the filler, and as result, the viscosity of the thermally conductive silicone composition increases, and the hardness of its cured product also rises. Formulas (2) to (5) are derived solely based on the particle size distribution of the filler, and hence, the optimal ranges of $E_{min}$ and $a_0$ described here are applicable regardless of the type of filler, whether low-density or high-density, and these optical ranges are also applicable when all fillers, including low-density and high-density fillers, mixed into the liquid silicone are treated as a single filler group. The thermally conductive filler may be a single type, or a combination of two or more types of thermally conductive fillers may be used. Furthermore, two or more types of thermally conductive fillers may be combined in any manner, in terms of average particle size and material. Similarly, the low-density filler may be a single type, or a combination of two or more types of low-density fillers may be used. Furthermore, two or more types of low-density fillers may be combined in any manner, in terms of average particle size and material.

As an example, when the particle size P at the starting point of the filler's particle size distribution is 0.33 μm, the particle size Q at the endpoint is 204 μm, and R is 47, k ≈ 1.15 is derived according to formulas (3) and (4). The starting point particle size P (μm) and endpoint particle size Q (μm) used to calculate the mean squared error E can be selected from any value, as long as they encompass a range where the cumulative particle size frequency of the filler is greater than 0% and less than 100%. R is determined appropriately based on the required calculation accuracy when calculating the mean squared error E between the actual cumulative particle size distribution and the cumulative particle size distribution based on formula (2). If R is increased, the accuracy improves, but the amount of computation increases, and if R is decreased, the amount of computation is reduced, but the accuracy is slightly worse.

FIG. 3 is a diagram illustrating the difference between the actual particle size distribution of the filler and the particle size distribution shown in formula (2), where the particle size P at the starting point is 0.33 μm, the particle size Q at the endpoint is 204 μm, and R is 47, when considering the cumulative particle size distribution. In FIG. 3, the solid curve represents the actual particle size distribution, while the dashed curve represents the particle size distribution shown in formula (2). The length of each segment in a group of line segments extending vertically between these two curves is given by |yn-cn|. FIG. 4 shows how the relationship between the particle size distribution calculated based on formula (2) and the actual particle size distribution changes as the value of coefficient a is varied. As shown in FIG. 4, when a = 9.2, the actual particle size distribution closely matched the particle size distribution based on formula (2). Additionally, as shown in FIG. 4, it can be seen that when a = 5 or a = 15, the deviation between the actual particle size distribution and the particle size distribution based on formula (2) is large.

<Surface Treatment Agent for Filler>

The filler that is component (C), which includes the thermally conductive filler that is component (C-1) and the low-density filler that is component (C-2), may undergo a surface hydrophobization treatment with a surface treatment agent to improve its wettability to the liquid silicone, which is matrix. By improving the wettability to the liquid silicone, the filler can be dispersed in the liquid silicone with a high degree of dispersion, leading to a reduced viscosity of the resulting thermally conductive silicone composition and a reduced hardness of the cured product. In particular, it is preferable for the thermally conductive filler to be treated with a surface treatment agent. Examples of surface treatment agents used for the filler include alkoxysilanes having an alkyl group having six or more carbon atoms in the molecule, such as octyltriethoxysilane and decyltrimethoxysilane; polyorganosiloxanes having a hydroxy group in the molecule; polyether-modified silicone oils; polyglyceryl-modified silicone oils; glycerin fatty acid esters such as glycerol monooleate; sorbitan fatty acid esters such as sorbitan monooleate and sorbitan trioleate; and fatty acids having 6 or more carbon atoms, such as stearic acid and oleic acid. The amount of the surface treatment agent added is preferably 0.005% by mass or more and 2.5% by mass or less, based on the mass of the filler. If the amount of the surface treatment agent added is less than 0.005% by mass, the treatment effect of the surface treatment agent is reduced, and the viscosity of the thermally conductive silicone composition increases. On the other hand, if the amount added exceeds 2.5% by mass, the hydrosilylation reaction is inhibited, and the thermally conductive silicone composition may become difficult to cure. Among various surface treatment agents, those that can chemically bond with hydroxy groups (-OH) present on the filler surface, such as alkoxysilane, are preferably used because they improve the storage stability of the thermally conductive silicone composition compared to surface treatment agents that bond through hydrogen bonds or intermolecular forces.

<Other Additives>

The liquid silicone that constitutes the thermally conductive silicone composition may contain other additives, such as a cure retarder and pigment, as needed.

<Method for Producing Thermally Conductive Silicone Compositions and their Cured Products>

The thermally conductive silicone composition according to the present invention can be produced by adding the hydrosilylation catalyst that is component (B) and the filler that is component (C) to the liquid silicone that is component (A), and kneading them together. However, when using liquid silicone containing components (A-1) to (A-4) or components (A-1) to (A-5), in order to prevent the crosslinking reaction from occurring before the thermally conductive silicone composition is used, it is preferable to, for example, mix the polymer components constituting the liquid silicone except for component (A-4), gradually add the thermally conductive filler that is component (C-1) and knead, and then divide the kneaded mixture into two parts, add the hydrosilylation catalyst that is component (B) and half the amount of the low-density filler that is component (C-2) to one part to make agent A, and add component (A-4) and the remaining half the amount of the low-density filler that is component (C-2) to the other part to make agent B, and mix the agents A and B at the time of use or just before use. The cured product of the thermally conductive silicone composition can be obtained by curing the thermally conductive silicone composition by leaving it at room temperature or by curing it by heating.

Examples

Next, the present invention will be described in detail based on examples and comparative examples, in which thermally conductive silicone compositions and their cured products were actually produced and evaluated. As evaluation criteria, plasticity was measured for the physical properties (uncured physical properties) of the thermally conductive silicone compositions, while hardness, density, thermal conductivity, and changes in hardness over time were measured for the physical properties (cured physical properties) of the cured products. In addition, for the examples and comparative examples, the minimum value $E_{min}$ of the mean squared error E, defined by the above formula (5), and the value $a_0$ of the coefficient a, corresponding to the minimum value $E_{min}$, were determined.

<Method for producing thermally conductive silicone compositions and their cured Products>

In the examples and comparative examples, the thermally conductive silicone compositions and their cured products were produced as follows. First, the polymer components of the liquid silicone were mixed, excluding component (A-4) (in the comparative examples, methylhydrogenpolysiloxane, which has silicon atom-bound hydrogen atoms in side chains of the molecular chain), and the thermally conductive filler that is component (C-1) and the surface treatment agent were gradually added to the mixture, which was subsequently heated and kneaded at 150°C in a 600 cc Banbury-type mixer. The resulting composition was cooled and then divided into two parts, to one part was added the hydrosilylation catalyst that is component (B) and half the amount of the low-density filler that is component (C-2) to prepare agent A, and to the other part was added component (A-4) and half the amount of the low-density filler that is component (C-2) to prepare agent B. After that, agents A and B were vacuum-degassed while being mixed with a vacuum stirrer, then filled into a mold, and heated and cured at 90°C for 30 minutes to obtain the cured product. According to this manufacturing method, the cured product with dimensions of 100 mm×100 mm×10 mm in thickness was obtained and used as a test piece.

<Methods for evaluating thermally conductive silicone compositions and their cured products>

(1) Method for measuring plasticity

The plasticity of the thermally conductive silicone compositions was measured by taking 2 $cm^3$ of each of agents A and B and using a Williams Plastometer (manufactured by Toyo Seiki-Seisaku-sho, Ltd.) in accordance with JIS K6249. The values were measured 5 minutes after a load was applied to each of agents A and B in an environment at 23 ± 2°C. The average value of the plasticity of agents A and B was then taken as the plasticity of the thermally conductive silicone composition. The smaller the plasticity value, the lower the viscosity of the composition.

(2) Hardness measurement method

The test pieces with a thickness of 10 mm obtained by the above-mentioned production method were conditioned in an environment of 23 ± 2°C, and then the hardness was measured using an Asker C hardness tester (manufactured by Kobunshi Keiki Co., Ltd.) in accordance with JIS K7312. At this time, the maximum value recorded after pressing the hardness tester was adopted as the hardness value.

(3) Density measurement method

The test pieces with a thickness of 10 mm obtained by the above-mentioned production method were conditioned in an environment of 23 ± 2°C, and then the density was measured using a density meter (manufactured by Toyo Seiki-Seisaku-sho, Ltd.) in accordance with JIS K6249.

(4) Thermal conductivity measurement method

The surface of the 10 mm thick test piece obtained by the above-mentioned production method was covered with poly wrap (manufactured by Ube Film, Ltd.), taking care not to trap any air bubbles, and the test piece was stabilized at 23 ± 2°C. The test piece covered with the wrap, was placed on a quasi-reference plate (manufactured by Kyoto Electronics Manufacturing Co., Ltd., material: zirconia, thermal conductivity: 3.36 W/m·K), and the thermal conductivity was measured by connecting a probe PD-13 (manufactured by Kyoto Electronics Manufacturing Co., Ltd.) to a thermal conductivity measuring device QTM-500 (manufactured by Kyoto Electronics Manufacturing Co., Ltd.). The current value was set to $I^2 = 9.000\ A^2$.

(5) Method for measuring change in hardness over time

The hardness $H_0$ of the test piece was measured using the above method described in (3) "Hardness measurement method", and then the test piece was placed in a thermostatic chamber set at a temperature of 85°C and a relative humidity of 85% for 500 hours, after which it was conditioned in an environment of 23 ± 2°C, and the hardness $H_1$ of the test piece was measured again using the above method described in (3) "Hardness measurement method". The change in hardness over time, ΔH, was then calculated using the following formula (9):

$$\Delta H = H_1 - H_0 \qquad (9)$$

(6) Method for calculating the minimum value $E_{min}$ of the mean squared error E and the corresponding value $a_0$ of the coefficient a

Assuming that k in the above formula (3) is 1.15, a geometric progression (..., 0.0076, 0.0087, 0.0100, 0.0115, 0.0132, ...) with a common ratio of 1.15, including a particle size of 0.0100 μm as one of the elements (terms) of the progression, was considered, where each term of the geometric progression represents a candidate for the calculation point of the cumulative particle size. Then, from among the candidates for the calculation points, the starting point P (μm) and the endpoint Q (μm) of the particle size, used to calculate the mean squared error E, were selected. The starting point P (μm) was set to the maximum particle size at which the cumulative frequency of the filler that is component (C) can be regarded as substantially 0%, and the endpoint Q (μm) was set to the minimum particle size at which the cumulative frequency of the filler that is the (C) component is considered to be 100%. Then, with P and Q thus determined, in the above geometric progression with the common ratio k, each element between the starting point P and the endpoint Q, including the starting point P and the endpoint Q, was set as a calculation point for the cumulative particle diameter. The number of calculation points thus set is R. Then, the mean squared error E was calculated based on formula (5), and the minimum value $E_{min}$ of the mean squared error E, and the value $a_0$ of the coefficient a, corresponding to the minimum value $E_{min}$, were determined.

[Example 1]

In the production of a thermally conductive silicone composition, according to the formulation amounts shown in Table 1, the following compounds were blended: as (A-1), dimethylpolysiloxane having vinyl groups at both ends of the molecular chain (DMS-V21, viscosity 100 cSt, manufactured by Gelest, Inc.); as component (A-2), dimethylpolysiloxane having a vinyl group at only one end of the molecular chain (RH-Vi305B, viscosity 1000 cSt, manufactured by Zhejiang Runhe Silicone New Material Co., Ltd.); as Component (A-3), 2,4,6,8-tetramethyl-2,4,6,8-tetravinylcyclotetrasiloxane (manufactured by Sigma-Aldrich Co. LLC), which is a cyclic siloxane having four vinyl groups in side chains of the molecular chain; as component (A-4), a dimethylpolysiloxane having silicon atom-bound hydrogen atoms at both ends of the molecular chain (FLD620V20, viscosity 20 $mm^2/s$, manufactured by Elkem Japan K.K.); as component (A-5), a dimethylpolysiloxane having no reactive functional groups (KF-96-100CS, viscosity 100 cSt, manufactured by Shin-Etsu Chemical Co., Ltd.); and as component (B), platinum(0)-2,4,6,8-tetramethyl-2,4,6,8-tetravinylcyclotetrasiloxane complex (SIP6832.2, manufactured by Gelest, Inc.), which is a platinum catalyst. In Table 1, dimethylpolysiloxane having vinyl groups at both ends of the molecular chain, which is component (A-1), is described as a "linear polysiloxane having vinyl groups at both ends", dimethylpolysiloxane having a vinyl group at only one end of the molecular chain, which is component (A-2), is described as a "linear polysiloxane having a vinyl group at one end", cyclic siloxane having four vinyl groups in side chains of the molecular chain, which is component (A-3), is described as a "cyclic siloxane having four vinyl groups", dimethylpolysiloxane having silicon atom-bound hydrogen atoms at both ends of the molecular chain, which is component (A-4), is described as a "linear polysiloxane having silicon atom-bound hydrogen atoms at both ends", and dimethylpolysiloxane having no reactive functional groups, which is component (A-5), is described as a "linear polysiloxane having no reactive functional groups". Furthermore, a dimethylpolysiloxane having silicon atom-bound hydrogen atoms at both ends of the molecular chain is used as component (A-4) in this example, and since this dimethylpolysiloxane is a dimethylpolysiloxane having silicon atom-bound hydrogen atoms at both ends of the molecular chain, it can also be described as an organohydrogenpolysiloxane having silicon atom-bound hydrogen atoms at the ends of the molecular chain and no silicon atom-bound hydrogen atoms in the side chains of the molecular chain.

For the thermally conductive filler that is component (C-1), three types of aluminum hydroxide were used: aluminum hydroxide having an average particle size of 54 μm (BW53, true density 2.42 $g/cm^3$, amorphous, manufactured by Nippon Light Metal Co., Ltd.); aluminum hydroxide having an average particle size of 10 μm (BW103, true density 2.42 $g/cm^3$, amorphous, manufactured by Nippon Light Metal Co., Ltd.); and aluminum hydroxide having an average particle size of 1 μm (BF013, true density 2.42 $g/cm^3$, amorphous, manufactured by Nippon Light Metal Co., Ltd.). For the low-density filler that is component (C-2), polyethylene particles having an average particle size of 155 μm (HI-ZEX MILLION 630M, true density 0.93 g/cm$^3$, spherical, manufactured by Mitsui Chemicals, Inc.) were used. These were added in the formulation amounts shown in Table 1. Furthermore, as surface treatment agents for the thermally conductive filler, octyltriethoxysilane (Silquest A-137, manufactured by Momentive Performance Materials Japan, LLC) and glycerol monooleate (Rheodol MO-60, manufactured by Kao Corporation) were used, and were added in the formulation amounts shown in Table 1.

The results obtained for the thermally conductive silicone composition of Example 1 and the cured product are shown in Table 2. The mean squared error E calculated from the particle size distribution and the addition ratio of each filler blended into the thermally conductive silicone composition based on formula (5) was smallest when a = 9.2 (i.e., $a_0$ = 9.2), and the value of E at this point (i.e., $E_{min}$) was 6.6. The plasticity value of the obtained thermally conductive silicone composition was low, with a value of 39, and it had low viscosity. The initial hardness of the cured product was 15 points, and after 500 hours at 85°C and 85% relative humidity, the hardness changed by only +2 points compared to the initial value. That is to say, the change in hardness under high-temperature and high-humidity conditions was small. The density of the cured product was low, at 1.93 g/cm$^3$, and it was lightweight, and the thermal conductivity was 2.7 W/(m· K). These values are satisfactory for both the thermally conductive silicone composition and the cured product. Table 2 shows, as the volume fractions of the fillers, the ratios of the volume of the thermally conductive filler, the volume of the low-density filler, and the total volume of the fillers to the volume of the thermally conductive silicone composition, and the ratio of the volume of the thermally conductive filler to the total volume of the fillers, which were calculated from the blending ratios of the fillers. Table 2 also shows the median diameter (D50) of the thermally conductive filler, the median diameter (D50) of the low-density filler, and the median diameter (D50) of the entire filler (i.e., both the thermally conductive filler and the low-density filler), as quantities characterizing the particle size distribution of fillers.

[Examples 2 to 4]

Thermally conductive silicone compositions were produced and evaluated in the same manner as in Example 1, except that the blended amounts of each thermally conductive filler, low-density filler, and surface treatment agent were changed as shown in Table 1. The results are shown in Table 2.

[Example 5]

In the production of a thermally conductive silicone composition, according to the formulation amounts shown in Table 1, the following compounds were blended: as component (A-1), dimethylpolysiloxane having vinyl groups at both ends of the molecular chain (DMS-V31, viscosity 1000 cSt, manufactured by Gelest, Inc.); as component (A-2), dimethylpolysiloxane having a vinyl group at one end of the molecular chain (MCR-V25, viscosity 500 cSt, manufactured by Gelest, Inc.); as component (A-3), 2,4,6,8-tetramethyl-2,4,6,8-tetravinylcyclotetrasiloxane (manufactured by Sigma-Aldrich Co. LLC), which is a cyclic siloxane having four vinyl groups in side chains of the molecular chain; as component (A-4), dimethylpolysiloxane having silicon atom-bound hydrogen atoms at both ends of the molecular chain (FLD620V20, viscosity 20 mm$^2$/s, manufactured by Elkem Japan K.K.), and as component (B), platinum (0)-1,3-divinyltetramethyldisiloxane complex (P2075, manufactured by Tokyo Chemical Industry Co., Ltd.), which is a platinum catalyst. The dimethylpolysiloxane having no reactive functional groups, which is component (A-5), was not used. The same thermally conductive filler and low-density filler as those used in Example 1 were used in the formulation amounts shown in Table 1. Furthermore, as surface treatment agents for the thermally conductive filler, octyltriethoxysilane (Silquest A-137, manufactured by Momentive Performance Materials Japan LLC) and stearic acid (stearic acid 50S, manufactured by New Japan Chemical Co., Ltd.) were used in the formulation amounts shown in Table 1. Evaluation was then conducted in the same manner as in Example 1. The results are shown in Table 2.

[Example 6]

A thermally conductive silicone composition was produced and evaluated in the same manner as in Example 5, except that the blended amounts of each thermally conductive filler, low-density filler, and surface treatment agent were changed as shown in Table 1. The results are shown in Table 2.

[Example 7]

In the production of a thermally conductive silicone composition, according to the formulation amounts shown in Table 1, the following compounds were blended: as component (A-1), dimethylpolysiloxane having vinyl groups at both ends of the molecular chain (DMS-V21, viscosity 100 cSt, manufactured by Gelest, Inc.); as component (A-2), dimethylpolysiloxane having a vinyl group at one end of the molecular chain (MCR-V25, viscosity 500 cSt, manufactured by Gelest,

Inc.); as component (A-3), a cyclic siloxane having four vinyl groups in side chains of the molecular chain (2,4,6,8-tetramethyl-2,4,6,8-tetravinylcyclotetrasiloxane, manufactured by Sigma-Aldrich Co. LLC); as component (A-4), dimethylpolysiloxane having silicon atom-bound hydrogen atoms at both ends of the molecular chain (FLD620V20, viscosity 20 $mm^2/s$, manufactured by Elkem Japan K.K.); as component (A-5), a dimethylpolysiloxane having no reactive functional groups (KF-96-100CS, viscosity 100 cSt, manufactured by Shin-Etsu Chemical Co., Ltd.); and as component (B), platinum(0)-2,4,6,8-tetramethyl-2,4,6,8-tetravinylcyclotetrasiloxane complex (SIP6832.2, manufactured by Gelest, Inc.), which is a platinum catalyst. The same thermally conductive filler and low-density filler as those used in Example 1 were used, and the same surface treatment agent for the thermally conductive filler as that used in Example 5 was used, and these were blended in the formulation amounts shown in Table 1. Evaluation was then conducted in the same manner as in Example 1. The results are shown in Table 2.

[Example 8]

A thermally conductive silicone composition was produced and evaluated in the same manner as in Example 7, except that the blended amounts of each thermally conductive filler, low-density filler, and surface treatment agent were changed as shown in Table 1. The results are shown in Table 2.

[Examples 9 to 11]

Thermally conductive silicone compositions were produced and evaluated in the same manner as in Example 5, except that the blended amounts of each thermally conductive filler, low-density filler, and surface treatment agent were changed as shown in Table 1. The results are shown in Table 2.

[Example 12]

A thermally conductive silicone composition was produced and evaluated in the same manner as in Example 1, except that polyethylene particles with an average particle size of 110 μm (HI-ZEX MILLION 030S, true density 0.95 $g/cm^3$, spherical, manufactured by Mitsui Chemicals, Inc.) were used as the low-density filler that is component (C-2), and the thermally conductive filler, low-density filler, and surface treatment agent were added in the formulation amounts shown in Table 1. The results are shown in Table 2.

[Examples 13 to 14]

Thermally conductive silicone compositions were produced and evaluated in the same manner as in Example 1, except that polyethylene particles with an average particle size of 65 μm (MIPELON XM-330, true density 0.94 $g/cm^3$, spherical, manufactured by Mitsui Chemicals, Inc.) were used as the low-density filler that is component (C-2), and the thermally conductive filler, low-density filler, and surface treatment agent were added in the formulation amounts shown in Table 1. The results are shown in Table 2.

[Example 15]

A thermally conductive silicone composition was produced and evaluated in the same manner as in Example 5, except that polyethylene particles with an average particle size of 30 μm (MIPELON XM-220, true density 0.94 $g/cm^3$, spherical, manufactured by Mitsui Chemicals, Inc.) were used as the low-density filler that is component (C-2), and the thermally conductive filler, low-density filler, and surface treatment agent were added in the formulation amounts shown in Table 1. The results are shown in Table 2.

[Example 16]

A thermally conductive silicone composition was produced and evaluated in the same manner as in Example 1, except that hollow resin particles made of an acrylonitrile copolymer coated with calcium carbonate and having an average particle size of 60 μm (MATSUMOTO MICROSPHERES MFL-UPR60, true density 0.12 $g/cm^3$, spherical, manufactured by Matsumoto Yushi Seiyaku Co., Ltd.) were used as the low-density filler that is component (C-2), and the thermally conductive filler, low-density filler, and surface treatment agent were added in the formulation amounts shown in Table 1. The results are shown in Table 2.

[Example 17]

A thermally conductive silicone composition was produced and evaluated in the same manner as in Example 16, except that three types of thermally conductive filler that is component (C-1) were used: aluminum hydroxide with an average particle size of 54 μm (BW53, true density 2.42 g/cm$^3$, amorphous, manufactured by Nippon Light Metal Co., Ltd.), aluminum hydroxide with an average particle size of 10 μm (BW103, true density 2.42 g/cm$^3$, amorphous, manufactured by Nippon Light Metal Co., Ltd.), and anhydrous magnesium carbonate with an average particle size of 1 μm (MAGTHERMO MS-S, true density 3.04 g/cm$^3$, polyhedral, manufactured by Konoshima Chemical Co., Ltd.), and the thermally conductive filler, low-density filler, and surface treatment agent were added in the formulation amounts shown in Table 1. The results are shown in Table 2.

[Example 18]

A thermally conductive silicone composition was produced and evaluated in the same manner as in Example 1, except that hollow glass particles with an average particle size of 40 μm (Glass Bubbles S38, true density 0.38 g/cm$^3$, spherical, manufactured by 3M Japan Ltd.) were used as the low-density filler that is component (C-2), and the silicone polymer, thermally conductive filler, low-density filler, and surface treatment agent were blended in the formulation amounts shown in Table 1. The results are shown in Table 2.

[Example 19]

A thermally conductive silicone composition was produced and evaluated in the same manner as in Example 18, except that hollow glass particles with an average particle size of 16μm (Glass Bubbles iM30K, true density 0.60 g/cm$^3$, spherical, manufactured by 3M Japan Ltd.) were used as the low-density filler that is component (C-2), and the thermally conductive filler, low-density filler, and surface treatment agent were added in the formulation amounts shown in Table 1. The results are shown in Table 2.

[Example 20]

A thermally conductive silicone composition was produced and evaluated in the same manner as in Example 5, except that three types of thermally conductive filler that is component (C-1) were used: aluminum hydroxide with an average particle size of 105μm (SB93, true density 2.42 g/cm$^3$, amorphous, manufactured by Nippon Light Metal Co., Ltd.), aluminum hydroxide with an average particle size of 10 μm (BW103, true density 2.42 g/cm$^3$, amorphous, manufactured by Nippon Light Metal Co., Ltd.), and aluminum hydroxide with an average particle size of 1 μm (BF013, true density 2.42 g/cm$^3$, amorphous, manufactured by Nippon Light Metal Co., Ltd.), and the thermally conductive filler, low-density filler, and surface treatment agent were added in the formulation amounts shown in Table 1. The results are shown in Table 2.

As shown in Table 2, for all Examples 2 to 20, similar to Example 1, the minimum value $E_{min}$ of the mean squared error E based on formula (5), and the value $a_0$ of the coefficient a, corresponding to $E_{min}$, satisfied formulas (7) and (8) above, and the obtained thermally conductive silicone compositions exhibited low plasticity and low viscosity. Additionally, the cured products exhibited low hardness, low density, small change in hardness, and high thermal conductivity.

[Comparative Example 1]

In the production of a thermally conductive silicone composition, according to the formulation amounts shown in Table 1, as the liquid silicone, dimethylpolysiloxane having vinyl groups at both ends of the molecular chain (SF3000EDK001, viscosity 1000 cSt, manufactured by KCC Corporation) (corresponding to component (A-1) in each example), and methylhydrogenpolysiloxane having silicon atom-bound hydrogen atoms in side chains of the molecular chain (HMS-501, viscosity 10-15 cSt, manufactured by Gelest, Inc.) (referred to as "linear polysiloxane having silicon atom-bound hydrogen atoms in side chains" in Table 1) were used, and as the platinum catalyst that is component (B), platinum(0)-1,3-divinyltetramethyldisiloxane complex (P2075, manufactured by Tokyo Chemical Industry Co., Ltd.) was blended. Furthermore, according to the formulation amounts shown in Table 1, aluminum hydroxide having an average particle size of 54 μm (BW53, true density 2.42 g/cm$^3$, amorphous, manufactured by Nippon Light Metal Co., Ltd.) and aluminum hydroxide having an average particle size of 10 μm (BW103, true density 2.42 g/cm$^3$ , amorphous, manufactured by Nippon Light Metal Co., Ltd.) were added as the thermally conductive filler that is component (C-1); and glycerol monooleate (Rheodol MO-60, manufactured by Kao Corporation) was added as a surface treatment agent for the thermally conductive filler. The obtained thermally conductive silicone composition and the cured product were evaluated in the same manner as in Example 1. The results are shown in Table 2.

The mean squared error E calculated from the particle size distribution and the addition ratio of each thermally conductive filler blended into the thermally conductive silicone composition based on formula (5) was smallest when a = 8.1 (i.e., $a_0$ = 8.1), and the value of E at this point (i.e., $E_{min}$) was 96.4. Therefore, the thermally conductive silicone composition of Comparative Example 1 does not satisfy the above formula (7). In addition, the plasticity value of the thermally conductive silicone composition was 119, indicating high viscosity, and the initial hardness of the cured product was 65 points, indicating that it was hard. The density of the cured product was low at 1.93 g/cm$^3$, but the thermal conductivity was low at 2.2 W/(m·K), which was insufficient. The change in hardness of the cured product was large at +26 points. This is believed to occur because, when attempting to achieve low viscosity and low hardness by using methylhydrogenpolysiloxane having silicon atom-bound hydrogen atoms in side chains of the molecular chain, the amount of remaining silicon atom-bound hydrogen atoms increases, and as a result, the crosslinking reaction between the silanol groups formed by the reaction of silicon atom-bound hydrogen atoms, and the remaining silicon atom-bound hydrogen atoms, proceeds gradually.

[Comparative Example 2]

A thermally conductive silicone composition was produced and evaluated in the same manner as in Comparative Example 1, except that the blended amounts of each thermally conductive filler, and surface treatment agent were changed as shown in Table 1. The results are shown in Table 2. The thermally conductive silicone composition of Comparative Example 2 does not satisfy the above formula (7). When the blended amount of the thermally conductive filler was increased to improve the thermal conductivity, the thermal conductivity rose to 3.0 W/(m·K), but at the same time, the density also increased to 2.05 g/cm$^3$. The plasticity value of the thermally conductive silicone composition in Comparative Example 2 was also as high as 135, indicating high viscosity, and the hardness of the cured product was also high at 81 points. For the same reason explained in Comparative Example 1, the change in hardness of the cured product was also large, at +11 points.

[Comparative Example 3]

A thermally conductive silicone composition was produced and evaluated in the same manner as in Comparative Example 1, except that boron nitride (UHP-1K, plate-like, manufactured by Showa Denko K.K.) with an average particle size of 8 μm was used as the thermally conductive filler that is component (C-1), polyethylene particles (MIPELON XM-220, true density 0.94 g/cm$^3$, spherical, manufactured by Mitsui Chemicals Inc.) with an average particle size of 30 μm were used as the low-density filler that is component (C-2), and the thermally conductive filler and low-density filler were added in the formulation amounts shown in Table 1. The results are shown in Table 2. The thermally conductive silicone composition in Comparative Example 2 satisfies neither of formulas (7) nor (8) above. When boron nitride, which is a plate-like filler, was used, the plasticity value of the thermally conductive silicone composition increased to 306, reading to higher viscosity, and the hardness of the cured product also rose to 83 points.

A comparison between the Examples and Comparative Examples demonstrated that the thermally conductive silicone composition according to the present invention, which satisfies both conditions of formulas (7) and (8) above, had a plasticity value of less than 110, indicating low viscosity, and its cured product exhibited good thermal conductivity of more than 2.3 W/(m/K), as well as a density of less than 2 g/cm$^3$, an Asker C hardness of less than 70 points, and a hardness change of less than ± 5 points. In other words, it was found that, according to the present invention, thermally conductive silicone compositions and their cured products which are satisfactory can be obtained.

[Table 1A]

| Table 1 | | | | | | | | | | (unit: parts by mass) |
|---|---|---|---|---|---|---|---|---|---|---|
| | | | Example | | | | | | | |
| | | | 1 | 2 | 3 | 4 | 5 | 6 | 7 | 8 |
| Matrix | Silicone | (A-1) Linear polysiloxane having vinyl groups at both ends | 30.00 | 30.00 | 30.00 | 30.00 | 37.25 | 37.25 | 27.28 | 27.28 |
| | | (A-2) Linear polysiloxane having a vinyl group at one end | 37.40 | 37.40 | 37.40 | 37.40 | 47.00 | 47.00 | 35.70 | 35.70 |
| | | (A-3) Cyclic siloxane having four vinyl groups | 0.10 | 0.10 | 0.10 | 0.10 | 0.12 | 0.12 | 0.12 | 0.12 |
| | | (A-4) Linear polysiloxane having silicon atom-bound hydrogen atoms at both ends | 12.50 | 12.50 | 12.50 | 12.50 | 15.63 | 15.63 | 11.90 | 11.90 |
| | | Linear polysiloxane having silicon atom-bound hydrogen atoms in the side chain | - | - | - | - | - | - | - | - |
| | | (A-5) Linear polysiloxane having no reactive functional groups | 20.00 | 20.00 | 20.00 | 20.00 | - | - | 25.00 | 25.00 |
| Curing catalyst | | (B) Platinum catalyst (calculated as platinum element) | 0.01 | 0.01 | 0.01 | 0.01 | 0.01 | 0.01 | 0.01 | 0.01 |

(continued)

Table 1 (unit: parts by mass)

| | | | | Example | | | | | | | |
|---|---|---|---|---|---|---|---|---|---|---|---|
| | | | | 1 | 2 | 3 | 4 | 5 | 6 | 7 | 8 |
| (C) Filler | (C-1) Thermally conductive filler | Aluminum hydroxide | Average particle size 105 μm; True density 2.42 $g/cm^3$ | - | - | - | - | - | - | - | - |
| | | | Average particle size 54 μm; True density 2.42 $g/cm^3$ | 346.00 | 349.00 | 373.00 | 411.00 | 411.00 | 348.00 | 286.00 | 266.00 |
| | | | Average particle size 10 μm; true density 2.42 $g/cm^3$ | 132.00 | 135.00 | 150.00 | 174.00 | 175.00 | 198.00 | 206.00 | 253.00 |
| | | | Average particle size 1 μm; True density 2.42 $g/cm^3$ | 94.00 | 117.00 | 134.00 | 160.00 | 128.00 | 123.00 | 98.00 | 124.00 |
| | | Anhydrous magnesium carbonate | Average particle size 1 μm; True density 3.04 $g/cm^3$ | - | - | - | - | - | - | - | - |
| | | Boron nitride | Average particle size 8 μm; True density 2.26 $g/cm^3$ | - | - | - | - | - | - | - | - |
| | (C-2) Low density filler | Polyethylene particles | Average particle size 155 μm; True density 0.93 $g/cm^3$ | 10.00 | 16.20 | 26.50 | 42.50 | 54.00 | 90.00 | 120.00 | 148.00 |
| | | | Average particle size 110 μm; True density 0.95 $g/cm^3$ | - | - | - | - | - | - | - | - |
| | | | Average particle size 65 μm; True density 0.94 $g/cm^3$ | - | - | - | - | - | - | - | - |
| | | | Average particle size 30 μm; True density 0.94 $g/cm^3$ | - | - | - | - | - | - | - | - |
| | | Resin balloon | Average particle size 60 μm; True density 0.12 $g/cm^3$ | - | - | - | - | - | - | - | - |
| | | Glass balloon | Average particle size 40 μm; True density 0.38 $g/cm^3$ | - | - | - | - | - | - | - | - |
| | | | Average particle size 16 μm; True density 0.60 $g/cm^3$ | - | - | - | - | - | - | - | - |

(continued)

| Table 1 | | | | | | | | | (unit: parts by mass) |
|---|---|---|---|---|---|---|---|---|---|
| | | Example | | | | | | | |
| | | 1 | 2 | 3 | 4 | 5 | 6 | 7 | 8 |
| Surface treatment agent | Octyltriethoxysilane | 1.13 | 1.20 | 1.31 | 1.49 | 1.43 | 1.34 | 1.18 | 1.29 |
| | Glycerol monooleate | 1.42 | 1.50 | 1.64 | 1.86 | - | - | - | - |
| | Stearic acid | - | - | - | - | 1.79 | 1.67 | 1.48 | 1.61 |
| Total | | 684.56 | 719.91 | 786.46 | 890.86 | 871.23 | 862.02 | 812.67 | 893.91 |

[Table 1B]

Table 1 (continued) (unit: parts by mass)

| | | | Example | | | | | | | |
|---|---|---|---|---|---|---|---|---|---|---|
| | | | 9 | 10 | 11 | 12 | 13 | 14 | 15 | 16 |
| Matrix | Silicone | (A-1) Linear polysiloxane having vinyl groups at both ends | 37.25 | 37.25 | 37.25 | 30.00 | 30.00 | 30.00 | 37.25 | 30.00 |
| | | (A-2) Linear polysiloxane having a vinyl group at one end | 47.00 | 47.00 | 47.00 | 37.40 | 37.40 | 37.40 | 47.00 | 37.40 |
| | | (A-3) Cyclic siloxane having four vinyl groups | 0.12 | 0.12 | 0.12 | 0.10 | 0.10 | 0.10 | 0.12 | 0.10 |
| | | (A-4) Linear polysiloxane having silicon atom-bound hydrogen atoms at both ends | 15.63 | 15.63 | 15.63 | 12.50 | 12.50 | 12.50 | 15.63 | 12.50 |
| | | Linear polysiloxane having silicon atom-bound hydrogen atoms in the side chain | - | - | - | - | - | - | - | - |
| | | (A-5) Linear polysiloxane having no reactive functional groups | - | - | - | 20.00 | 20.00 | 20.00 | - | 20.00 |
| Curing catalyst | | (B) Platinum catalyst (calculated as platinum element) | 0.01 | 0.01 | 0.01 | 0.01 | 0.01 | 0.01 | 0.01 | 0.01 |

(continued)

Table 1 (continued) (unit: parts by mass)

| | | | | Example | | | | | | | |
|---|---|---|---|---|---|---|---|---|---|---|---|
| | | | | 9 | 10 | 11 | 12 | 13 | 14 | 15 | 16 |
| (C) Filler | (C-1) Thermally conductive filler | Aluminum hydroxide | Average particle size 105 μm; True density 2.42 g/cm$^3$ | - | - | - | - | - | - | - | - |
| | | | Average particle size 54 μm; True density 2.42 g/cm$^3$ | 373.00 | 472.00 | 290.00 | 396.00 | 361.00 | 392.00 | 288.00 | 409.00 |
| | | | Average particle size 10 μm; True density 2.42 g/cm$^3$ | 150.00 | - | 174.00 | 186.00 | 163.00 | 205.00 | 265.00 | 163.00 |
| | | | Average particle size 1 μm; True density 2.42 g/cm$^3$ | 134.00 | 185.00 | 192.00 | 162.00 | 126.00 | 148.00 | 192.00 | 138.00 |
| | | Anhydrous magnesium carbonate | Average particle size 1 μm; True density 3.04 g/cm$^3$ | - | - | - | - | - | - | - | - |
| | | Boron nitride | Average particle size 8 μm; True density 2.26 g/cm$^3$ | - | - | - | - | - | - | - | - |
| | (C-2) Low density filler | Polyethylene particles | Average particle size 155 μm; True density 0.93 g/cm $^3$ | 26.50 | 26.50 | 26.50 | - | - | - | - | - |
| | | | Average particle size 110 μm; True density 0.95 g/cm$^3$ | - | - | - | 44.00 | - | - | | |
| | | | Average particle size 65 μm; True density 0.94 g/cm$^3$ | - | - | - | - | 25.50 | 43.00 | - | - |
| | | | Average particle size 30 μm; True density 0.94 g/cm$^3$ | - | - | - | - | - | - | 43.00 | - |
| | | Resin balloon | Average particle size 60 μm; True density 0.12 g/cm$^3$ | - | - | - | - | - | - | - | 2.10 |
| | | Glass balloon | Average particle size 40 μm; True density 0.38 g/cm$^3$ | - | - | - | - | - | - | - | - |
| | | | Average particle size 16 μm; True density 0.60 g/cm$^3$ | - | - | - | - | - | - | - | - |

(continued)

Table 1 (continued) (unit: parts by mass)

| | | Example | | | | | | | |
|---|---|---|---|---|---|---|---|---|---|
| | | 9 | 10 | 11 | 12 | 13 | 14 | 15 | 16 |
| Surface treatment agents | Octyltriethoxvsilane | 1.31 | 1.31 | 1.31 | 1.49 | 1.30 | 1.49 | 1.49 | 1.42 |
| | Glycerol monooleate | - | - | - | 1.86 | 1.63 | 1.86 | - | 1.78 |
| | Stearic acid | 1.64 | 1.64 | 1.64 | - | - | - | 1.86 | - |
| Total | | 786.46 | 786.46 | 785.46 | 891.36 | 778.44 | 891.36 | 891.36 | 815.31 |

[Table 1C]

| Table 1 (continued) | | | | | | | | (unit: parts by mass) | | |
|---|---|---|---|---|---|---|---|---|---|---|
| | | | | Example | | | | Comparative Example | | |
| | | | | 17 | 18 | 19 | 20 | 1 | 2 | 3 |
| Matrix | Silicone | (A-1) Linear polysiloxane having vinyl groups at both ends | | 30.00 | 12.00 | 12.00 | 37.25 | 85.00 | 85.00 | 85.00 |
| Matrix | Silicone | (A-2) Linear polysiloxane having a vinyl group at one end | | 37.40 | 60.40 | 60.40 | 47.00 | - | - | - |
| Matrix | Silicone | (A-3) Cyclic siloxane having four vinyl groups | | 0.10 | 0.10 | 0.10 | 0.12 | - | - | - |
| Matrix | Silicone | (A-4) Linear polysiloxane having silicon atom-bound hydrogen atoms at both ends | | 12.50 | 7.50 | 7.50 | 15.63 | - | - | - |
| Matrix | Silicone | Linear polysiloxane having silicon atom-bound hydrogen atoms in the side chain | | - | - | - | - | 15.00 | 15.00 | 15.00 |
| Matrix | Silicone | (A-5) Linear polysiloxane having no reactive functional groups | | 20.00 | 20.00 | 20.00 | - | - | - | - |
| Curing catalyst | | (B) Platinum catalyst (calculated as platinum element) | | 0.01 | 0.01 | 0.01 | 0.01 | 0.01 | 0.01 | 0.01 |
| (C) Filler | (C-1) Thermally conductive filler | Aluminum hydroxide | Average particle size 105 μm; True density 2.42 g/cm$^3$ | - | - | - | 436.00 | - | - | - |
| (C) Filler | (C-1) Thermally conductive filler | Aluminum hydroxide | Average particle size 54 μm; True density 2.42 g/cm$^3$ | 360.00 | 380.00 | 464.00 | - | 381.00 | 514.00 | - |
| (C) Filler | (C-1) Thermally conductive filler | Aluminum hydroxide | Average particle size 10 μm; True density 2.42 g/cm$^3$ | 150.00 | 160.00 | 69.00 | 155.00 | 129.00 | 175.00 | - |
| (C) Filler | (C-1) Thermally conductive filler | Aluminum hydroxide | Average particle size 1 μm; True density 2.42 g/cm$^3$ | - | 145.00 | 152.00 | 67.00 | - | - | - |
| (C) Filler | (C-1) Thermally conductive filler | Anhydrous magnesium carbonate | Average particle size 1 μm; | 189.00 | - | - | - | - | - | - |

(continued)

| Table 1 (continued) | | | | | | | | | | (unit: parts by mass) |
|---|---|---|---|---|---|---|---|---|---|---|
| | | | | Example | | | | Comparative Example | | |
| | | | | 17 | 18 | 19 | 20 | 1 | 2 | 3 |
| | | | True density 3.04 g/cm$^3$ | | | | | | | |
| | | Boron nitride | Average particle size 8 μm; True density 2.26 g/cm$^3$ | - | - | - | - | - | - | 340.00 |
| | (C-2) Low density filler | Polyethylene particles | Average particle size 155 μm; True density 0.93 g/cm$^3$ | - | - | - | 26.50 | - | - | - |
| | | | Average particle size 110 μm; True density 0.95 g/cm$^3$ | - | - | - | - | - | - | - |
| | | | Average particle size 65 μm; True density 0.94 g/cm$^3$ | - | - | - | - | - | - | - |
| | | | Average particle size 30 μm; True density 0.94 g/cm$^3$ | - | - | - | - | - | - | 100.00 |
| | | Resin balloon | Average particle size 60 μm; True density 0.12 g/cm$^3$ | 4.60 | - | - | - | - | - | - |
| | | Glass balloon | Average particle size 40 μm; True density 0.38 g/cm$^3$ | - | 12.00 | - | - | - | - | - |
| | | | Average particle size 16 | - | - | 20.00 | - | - | - | - |

(continued)

| Table 1 (continued) | | | | | | | | (unit: parts by mass) | | |
|---|---|---|---|---|---|---|---|---|---|---|
| | | | | Example | | | | Comparative Example | | |
| | | | | 17 | 18 | 19 | 20 | 1 | 2 | 3 |
| | | | μm; True density 0.60 g/cm$^3$ | | | | | | | |
| Surface treatment agents | | Octyltriethoxysilane | | 1.41 | 6.96 | 7.05 | 1.31 | - | - | - |
| | | Glycerol monooleate | | 1.76 | - | - | - | 2.50 | 3.45 | 1.70 |
| | | Stearic acid | | - | - | - | 1.64 | - | - | - |
| Total | | | | 806.78 | - | 812.06 | 787.46 | 612.51 | 792.46 | 541.71 |

[Table 2A]

Table 2

| | | unit | Example | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| Filler volume fraction | $\frac{\text{(C-1) Thermally conductive filler volume}}{\text{Thermally conductive silicone composition volume}} \times 100$ | volume% | 67.0 | 66.8 | 66.8 | 66.9 | 64.2 | 57.6 | 50.9 | 50.0 | 66.8 | 66.8 | 66.8 | 66.8 |
| | $\frac{\text{(C-2) Low density filler volume}}{\text{Thermally conductive silicone composition volume}} \times 100$ | volume% | 3.0 | 4.7 | 7.0 | 9.9 | 12.6 | 20.2 | 26.9 | 30.0 | 7.0 | 7.0 | 7.0 | 10.1 |
| | $\frac{\text{(C) Filler volume}}{\text{Thermally conductive silicone composition volume}} \times 100$ | volume% | 70.0 | 71.5 | 73.8 | 76.8 | 76.8 | 77.8 | 77.9 | 80.0 | 73.8 | 73.8 | 73.8 | 76.8 |
| | $\frac{\text{(C-1) Thermally conductive filler volume}}{\text{(C) Filler volume}} \times 100$ | volume% | 95.6 | 93.4 | 90.5 | 87.1 | 83.6 | 74.1 | 65.4 | 62.5 | 90.5 | 90.5 | 90.5 | 86.9 |
| Filler particle size distribution | (C-1) Thermally conductive tiller D50 | µm | 26 | 25 | 22 | 22 | 24 | 21 | 19 | 16 | 22 | 35 | 15 | 21 |
| | (C-2) Low density filler D50 | µm | 155 | 155 | 155 | 155 | 155 | 155 | 155 | 155 | 155 | 155 | 155 | 110 |
| | (C) Filler (thermally conductive filler + low density filler) D50 | µm | 29 | 28 | 29 | 30 | 38 | 43 | 53 | 53 | 29 | 41 | 19 | 29 |
| Parameter | $a_0$ | - | 9.2 | 9.2 | 9.0 | 8.8 | 8.3 | 7.8 | 7.3 | 7.0 | 9.0 | 8.5 | 10.4 | 8.9 |
| | $E_{min}$ | - | 6.6 | 7.8 | 8.1 | 8.8 | 5.6 | 7.3 | 14.7 | 15.3 | 8.1 | 25.9 | 40.0 | 10.0 |
| Uncured product physical property | Plasticity value (5-minute value) | - | 39 | 50 | 76 | 102 | 79 | 101 | 88 | 109 | 61 | 65 | 93 | 97 |

(continued)

Table 2

| | | unit | Example | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| Cured product physical properties | Hardness (Asker C) | - | 15 | 29 | 40 | 56 | 48 | 50 | 47 | 60 | 21 | 28 | 53 | 54 |
| | Density | g/ $cm^3$ | 1.93 | 1.92 | 1.93 | 1.93 | 1.90 | 1.80 | 1.71 | 1.69 | 1.93 | 1.93 | 1.92 | 1.93 |
| | Thermal conductivity | W/m·K | 2.7 | 2.8 | 3.0 | 3.4 | 2.8 | 2.5 | 2.4 | 2.4 | 2.9 | 3.0 | 2.8 | 3.2 |
| | Hardness change (85°C, 85%RH, 500 h) | point | +2 | -1 | +1 | +2 | +1 | +4 | +2 | +4 | -1 | +1 | +3 | +1 |

[Table 2B]

Table 2 (continued)

| | | unit | Example | | | | | | | | | Comparative Example | | |
|---|---|---|---|---|---|---|---|---|---|---|---|---|---|---|
| | | | 12 | 15 | 14 | 15 | 16 | 17 | 18 | 19 | 20 | 1 | 2 | 3 |
| Filler volume fraction $\frac{\text{(C-1) Thermally conductive filler volume}}{\text{Thermally conductive silicone composition volume}} \times 100$ | | volume% | 66.8 | 66.8 | 66.9 | 66.9 | 70.3 | 65.3 | 66.5 | 66.2 | 66.9 | 66.6 | 72.7 | 41.6 |
| | | volume% | 10.1 | 6.7 | 9.9 | 9.9 | 4.2 | 9.2 | 7.4 | 7.8 | 7.0 | 0.0 | 0.0 | 29.4 |
| | | volume% | 76.8 | 73.6 | 76.8 | 76.8 | 74.5 | 74.5 | 73.9 | 74.0 | 73.9 | 66.6 | 72.7 | 71.0 $\frac{\text{(C-1) Thermally conductive filler volume}}{\text{(C) Filler volume}} \times 100$ |
| | | volume% | 86.9 | 90.8 | 87.1 | 87.1 | 94.4 | 87.7 | 90.0 | 89.5 | 90.5 | 100.0 | 100.0 | 58.6 |
| Filler | (C-1) Thermally conductive filler D50 | μm | 21 | 22 | 20 | 14 | 25 | 20 | 22 | 32 | 88 | 38 | 38 | 15 |
| particle size | (C-2) Low density filler D50 | μm | 110 | 65 | 65 | 30 | 60 | 60 | 40 | 16 | 155 | | | 30 |
| distribution | (C) Filler (thermally conductive filler + low density filler) D50 | μm | 29 | 26 | 28 | 13 | 26 | 26 | 25 | 26 | 94 | 38 | 38 | 9 |
| Parameter | $a_0$ | - | 8.9 | 9.6 | 8.9 | 13.0 | 8.9 | 9.7 | 9.9 | 9.6 | 6.0 | 8.1 | 8.1 | 16.7 |
| | $E_{min}$ | - | 10.0 | 7.7 | 8.4 | 27.9 | 15.8 | 10.4 | 8.7 | 9.4 | 39.9 | 96.4 | 96.4 | 289.0 |
| Uncured product physical property | Plasticity value (5-minute value) | - | 97 | 64 | 101 | 99 | 73 | 70 | 74 | 76 | 57 | 119 | 135 | 306 |
| Cured product physical properties | Hardness (Asker C) | | 54 | 34 | 57 | 55 | 40 | 42 | 41 | 45 | 42 | 65 | 81 | 83 |
| | Density | g/ $cm^3$ | 1.93 | 1.93 | 1.94 | 1.93 | 1.92 | 1.93 | 1.93 | 1.93 | 1.93 | 1.93 | 2.05 | 1.50 |
| | Thermal conductivity | W/m·K | 3.2 | 2.8 | 3.1 | 2.9 | 3.0 | 3.1 | 2.8 | 3.0 | 2.8 | 2.2 | 3.0 | 2.1 |
| | Hardness change (85°C, 85%RH, 500 h) | point | +1 | -1 | +2 | 0 | +2 | +4 | +3 | +2 | +3 | +28 | +11 | +7 |

## Claims

1. A thermally conductive silicone composition that is liquid and curable, comprising:

(A) a liquid silicone,
(B) a hydrosilylation catalyst, and
(C) a filler,
wherein the filler comprises at least
(C-1) a thermally conductive filler having a true density greater than the density of the liquid silicone, and
(C-2) a low-density filler having a true density equal to or less than the density of the liquid silicone, and
wherein, when a number of particle sizes as calculation points for the cumulative frequency in the cumulative particle size distribution of the filler on a volume basis is denoted as R,
the particle sizes of the thermally conductive filler, as the minimum and maximum among the particle sizes as calculation points for the cumulative frequency, are denoted as P (μm) and Q (μm), respectively,
the particle size of the filler at the nth calculation point, determined to satisfy the following formulas (a1) and (a2), is denoted as $x_n$ (μm) (where n is an integer satisfying $1 \leq n \leq R$) and
the volume-based cumulative frequency of the particle size of the thermally conductive filler corresponding to the particle size $x_n$ in the cumulative particle size distribution is denoted as $c_n$ (%),
with respect to the particle size distribution of the filler, the minimum value $E_{min}$ of the mean squared error E, expressed by the following formula (a3), and the value $a_0$ of the coefficient a in the following formula (a4), corresponding to the minimum value $E_{min}$, satisfy the following formulas:

$$0 \leq E_{min} \leq 40;$$

and

$$6.0 \leq a_0 \leq 13.0.$$

[Math. 1]

$$x_n = k^{n-1}P \qquad (a1)$$

$$x_R = Q \qquad (a2)$$

$$E = \frac{1}{R}\sum_{n=1}^{R}(c_n - y_n)^2 \qquad (a3)$$

where

$$y_n = \begin{cases} a x_n^{1/2} & (a x_n^{1/2} < 100) \\ 100 & (a x_n^{1/2} \geqq 100) \end{cases} \qquad (a4)$$

2. The thermally conductive silicone composition according to claim 1, wherein the volume fraction of the filler (C) in the thermally conductive silicone composition is 70.0% by volume or more and 80.0% by volume or less, and
the ratio of the volume of the thermally conductive filler to the volume of the low-density filler in the filler (C) is 1.67 or more and 22.0 or less.

3. The thermally conductive silicone composition according to claim 1 or 2, wherein the low-density filler comprises at least one or more of polyethylene solid particles, resin hollow particles, and glass hollow particles.

4. The thermally conductive silicone composition according to claim 1 or 2, wherein the thermally conductive filler comprises a filler made of aluminum hydroxide.

**5.** The thermally conductive silicone composition according to claim 1, wherein the liquid silicone comprises

(A-1) an organopolysiloxane including an alkenyl group at each of both ends of the molecular chain,
(A-2) an organopolysiloxane including an alkenyl group at one end of the molecular chain and no reactive functional group at the other end,
(A-3) an organopolysiloxane including at least three or more alkenyl groups in the molecule, and
(A-4) an organohydrogenpolysiloxane including a silicon atom-bound hydrogen atom at the ends of the molecular chain and no silicon atom-bound hydrogen atoms in the side chains of the molecular chain.

**6.** The thermally conductive silicone composition according to claim 5, wherein the liquid silicone comprises an organopolysiloxane represented by the following general formula (1):

[Chem. 1]

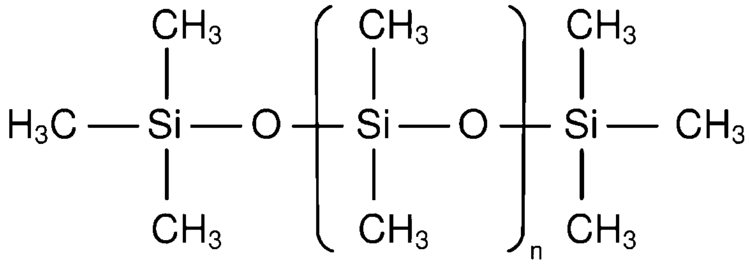

(1)

**7.** A cured product obtained by curing the thermally conductive silicone composition according to claim 1 or 2 via a hydrosilylation reaction.

[FIG. 1]

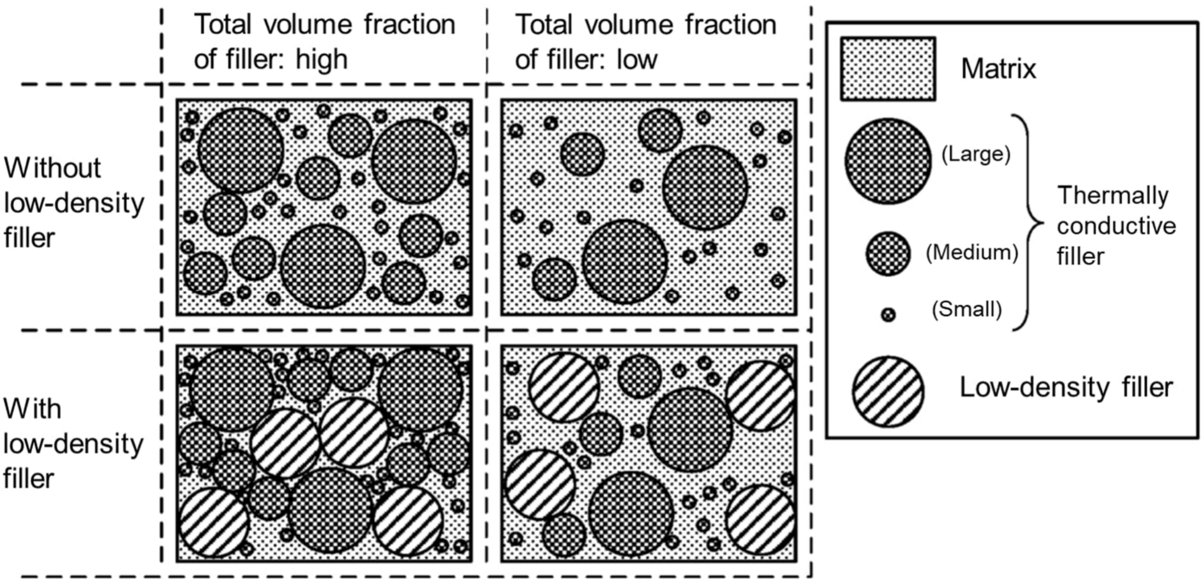
Total volume fraction of filler: high
Total volume fraction of filler: low
Without low-density filler
With low-density filler
Matrix
(Large)
(Medium)
(Small)
Thermally conductive filler
Low-density filler

[FIG. 2]

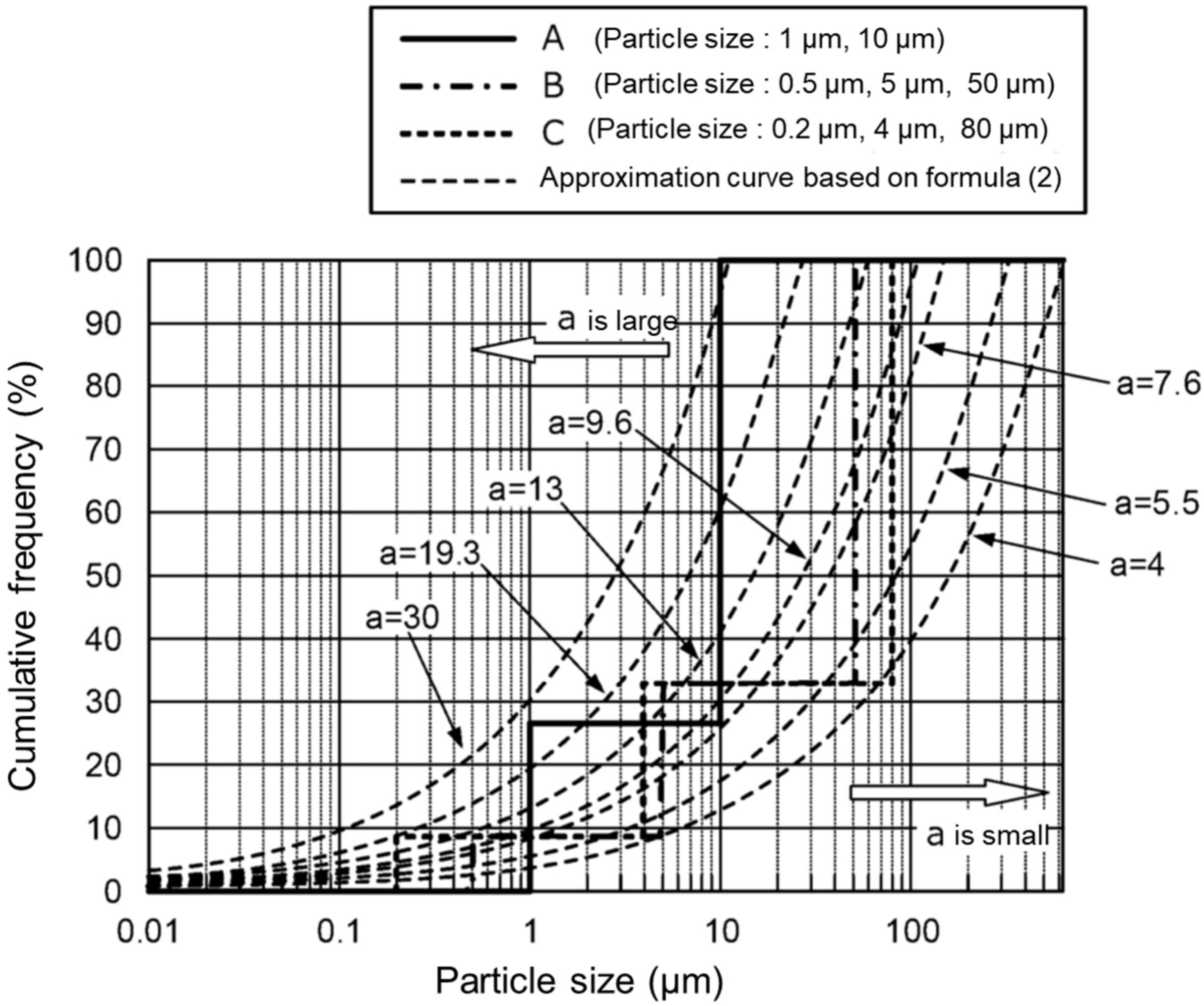
A (Particle size : 1 μm, 10 μm)
B (Particle size : 0.5 μm, 5 μm, 50 μm)
C (Particle size : 0.2 μm, 4 μm, 80 μm)
Approximation curve based on formula (2)
a is large
a is small
a=7.6
a=9.6
a=13
a=19.3
a=30
a=5.5
a=4
Cumulative frequency (%)
Particle size (μm)
0
10
20
30
40
50
60
70
80
90
100
0.01
0.1
1
10
100

[FIG. 3]

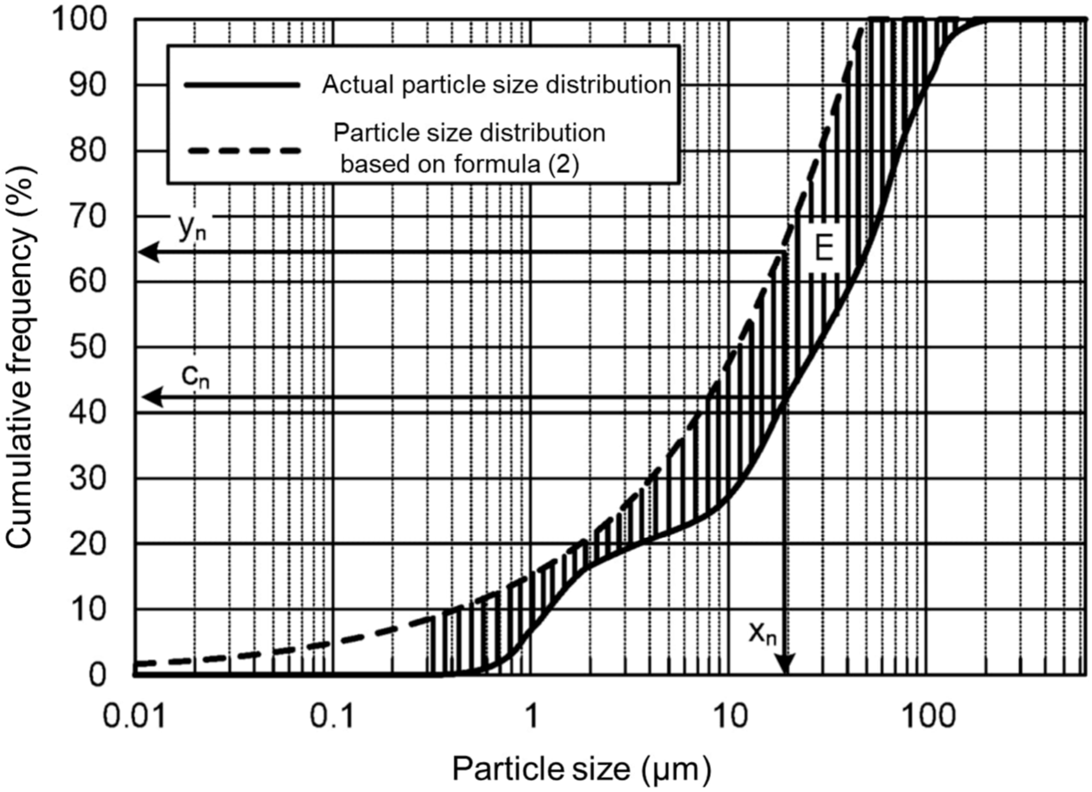
100
90
80
70
60
50
40
30
20
10
0
Cumulative frequency (%)
Actual particle size distribution
Particle size distribution
based on formula (2)
yn
cn
E
xn
0.01
0.1
1
10
100
Particle size (μm)

[FIG. 4]

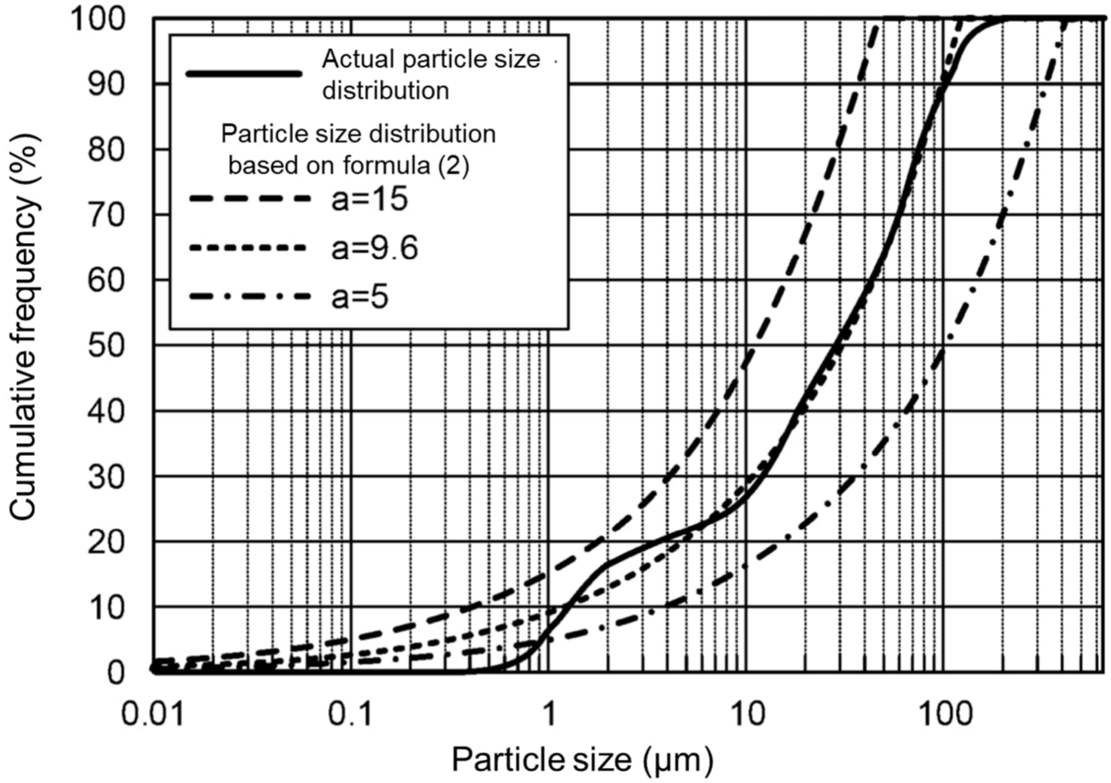
100
90
80
70
60
50
40
30
20
10
0
Cumulative frequency (%)
Actual particle size
distribution
Particle size distribution
based on formula (2)
a=15
a=9.6
a=5
0.01
0.1
1
10
100
Particle size (μm)

## INTERNATIONAL SEARCH REPORT

International application No. **PCT/JP2022/048512**

**A. CLASSIFICATION OF SUBJECT MATTER**

***C08L 83/07***(2006.01)i; ***C08K 3/22***(2006.01)i; ***C08K 7/22***(2006.01)i; ***C08L 23/06***(2006.01)i; ***C08L 83/05***(2006.01)i
FI: C08L83/07; C08L83/05; C08L23/06; C08K3/22; C08K7/22

According to International Patent Classification (IPC) or to both national classification and IPC

**B. FIELDS SEARCHED**

Minimum documentation searched (classification system followed by classification symbols)

C08L1/00-101/16; C08K3/00-13/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2012-131916 A (SHIN-ETSU CHEMICAL CO., LTD.) 12 July 2012 (2012-07-12) claims | 1-7 |
| A | JP 2012-153774 A (SHIN-ETSU CHEMICAL CO., LTD.) 16 August 2012 (2012-08-16) claims | 1-7 |
| A | JP 2019-509382 A (DOW SILICONES CORP.) 04 April 2019 (2019-04-04) claims | 1-7 |
| A | JP 2001-503471 A (LOCTITE CORPORATION) 13 March 2001 (2001-03-13) claims | 1-7 |
| A | JP 2020-512465 A (KCC CORP.) 23 April 2020 (2020-04-23) claims | 1-7 |
| A | WO 2010/013847 A1 (DOW CORNING TORAY CO., LTD.) 04 February 2010 (2010-02-04) claims | 1-7 |
| A | JP 2016-011322 A (SHIN-ETSU CHEMICAL CO., LTD.) 21 January 2016 (2016-01-21) claims | 1-7 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 February 2023** | **07 March 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/048512**

**C. DOCUMENTS CONSIDERED TO BE RELEVANT**

| Category* | Citation of document, with indication, where appropriate, of the relevant passages | Relevant to claim No. |
|---|---|---|
| A | WO 2014/181657 A1 (SHIN-ETSU CHEMICAL CO., LTD.) 13 November 2014 (2014-11-13)<br>claims | 1-7 |
| A | JP 2022-545162 A (DOW SILICONES CORP.) 26 October 2022 (2022-10-26)<br>claims | 1-7 |
| A | JP 2011-016923 A (SHIN-ETSU CHEMICAL CO., LTD.) 27 January 2011 (2011-01-27)<br>claims | 1-7 |

Form PCT/ISA/210 (second sheet) (January 2015)

**INTERNATIONAL SEARCH REPORT**
**Information on patent family members**

International application No.
**PCT/JP2022/048512**

| Patent document cited in search report | Publication date (day/month/year) | Patent family member(s) | Publication date (day/month/year) |
|---|---|---|---|
| JP 2012-131916 A | 12 July 2012 | US 2012/0161066 A1 claims<br>CN 102604386 A<br>KR 10-2012-0071336 A | |
| JP 2012-153774 A | 16 August 2012 | CN 102618036 A<br>KR 10-2012-0086249 A | |
| JP 2019-509382 A | 04 April 2019 | US 2019/0048146 A1 claims<br>WO 2017/162839 A1<br>EP 3433320 A1<br>CN 108779333 A<br>KR 10-2018-0122395 A | |
| JP 2001-503471 A | 13 March 2001 | US 6284817 B1 claims<br>US 2003/0164223 A1<br>WO 1998/035360 A1<br>EP 892978 A1<br>KR 10-2000-0064867 A | |
| JP 2020-512465 A | 23 April 2020 | US 2019/0359872 A1 claims<br>WO 2018/182222 A1<br>CN 110312754 A<br>KR 10-1864534 B1 | |
| WO 2010/013847 A1 | 04 February 2010 | US 2011/0190410 A1 claims<br>EP 2311912 A1<br>CN 102112556 A<br>KR 10-2011-0039565 A | |
| JP 2016-011322 A | 21 January 2016 | (Family: none) | |
| WO 2014/181657 A1 | 13 November 2014 | US 2016/0096984 A1 claims<br>JP 2014-218564 A<br>EP 2995651 A1<br>CN 105164208 A<br>KR 10-2016-0006689 A | |
| JP 2022-545162 A | 26 October 2022 | US 2022/0275206 A1 claims<br>WO 2021/016743 A1<br>EP 4004117 A1<br>CN 114144477 A<br>KR 10-2022-0043145 A | |
| JP 2011-016923 A | 27 January 2011 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP 2012224711 A

### Non-patent literature cited in the description

- **JONG-WOO et al.** The properties of AlN-filled epoxy molding compounds by the effects of filler size distribution. *J. Mater. Sci.*, 2000, vol. 35, 5907-5913